# EUROPÄISCHE PATENTSCHRIFT

(11) **EP 2 115 398 B1**
(45) Veröffentlichungstag und Bekanntmachung des Hinweises auf die Patenterteilung: **18.11.2015**
(21) Anmeldenummer: 07847340.2
(22) Anmeldetag: 26.11.2007
(51) Int. Cl.: G01D 9/00

(54) **MESSANORDNUNG ZUM ERFASSEN CHEMISCHER UND/ODER PHYSIKALISCHER MESSGRÖSSEN SOWIE MESSGERÄT DAFÜR**
MEASURING SYSTEM FOR DETECTING CHEMICAL AND/OR PHYSICAL MEASUREMENT VARIABLES AND CORRESPONDING MEASURING DEVICE
DISPOSITIF DE MESURE POUR LA DÉTECTION DE GRANDEURS DE MESURE CHIMIQUES ET/OU PHYSIQUES ET APPAREIL DE MESURE DESTINÉ À CET EFFET

(30) Priorität: 27.11.2006 DE 102006056175
(43) Veröffentlichungstag der Anmeldung: 11.11.2009
(73) Patentinhaber: Endress+Hauser Flowtec AG, 4153 Reinach (CH)
(72) Erfinder: KARBULA, Jiri, 4125 Riehen (CH); LALLA, Robert, 79541 Lörrach (DE); ENGSTLER, Gernot, 4125 Riehen (CH)
(74) Vertreter: Andres, Angelika Maria
(86) Internationale Anmeldenummer: PCT/EP2007/062806
(87) Internationale Veröffentlichungsnummer: WO 2008/065070

(56) Entgegenhaltungen:
- US-A1- 2006 161 359

## Beschreibung

Die Erfindung betrifft eine Meßanordnung zum Erfassen chemischer und/oder physikalischer Meßgrößen, insb. von strömungsfähigen und/oder schüttfähigen Medien, welche Meßanordnung wenigstens ein Meßgerät, das mittels einer internen Meßgerät-Elektronik im Betrieb wiederholt die wenigstens eine zu erfassende Meßgröße repräsentierende, insb. digitale, Meßwerte generiert, sowie ein dem wenigstens einen Meßgerät übergeordenetes, insb. räumlich verteiltes und/oder vom Meßgerät räumlich entferntes, elektronisches Datenverarbeitungssystem umfaßt. Darüberhinaus betrifft die Erfindung ein, insb. zur Verwirklichung vorgenannter Meßanordnung geeignetes, Meßgerät mit einen auf Änderungen wenigstens einer physikalischen oder chemischen Meßgröße reagierenden Meßaufnehmer, der wenigstens ein von der wenigstens einen Meßgröße beeinflußtes Meßsignal liefert, und mit einem an den Meßaufnehmer angeschlossene Meßgerät-Elektronik.

In der industriellen Prozeß-Meßtechnik werden, insb. auch im Zusammenhang mit der Automation chemischer oder verfahrenstechnischer Prozesse und/oder der automatiserten Steuerung von industriellen Anlagen, prozeßnah installierte Meßgeräte, so genannte Feldgeräte, eingesetzt, die der Erzeugung von Prozeßgrößen - analog oder digital - repräsentierenden Meßwerten sowie diese letzlich tragende Meßwertsignalen dienen. Bei den jeweils zu erfassenden Prozeßgrößen kann es sich beispielsweise, um einen Massendurchfluß, eine Dichte, eine Viskosität, einen Füll- oder einen Grenzstand, einen Druck oder eine Temperatur oder dergleichen, eines flüssigen, pulver-, dampf- oder gasförmigen Mediums handeln, das in einem entsprechenden Behälter, wie z.B. einer Rohrleitung oder einem Tank, geführt bzw. vorgehalten wird. Zum Erfassen der jeweiligen Prozeßgrößen weisen Feldgeräte der vorgenannten Art jeweils jeweils einen entsprechenden physikalisch-elektrischen oder chemisch-elektrischen Meßaufnehmer auf. Dieser ist zumeist in eine Wandung des das Medium jeweils führenden Behälters oder der in den Verlauf einer das Medium jeweils führenden Leitung, beispielsweise eine Rohrleitung, eingesetzt und dient dazu, wenigstens ein mit der zu erfassenden Prozeßgröße entsprechend korrespondierendes elektrisches Meßsignal zu erzeugen. Zum Verarbeiten des Meßsignals ist der Meßaufnehmer weiters mit einer in der Meßgerät-Elektronik vorgesehenen, der Weiterverarbeitung oder Auswertung des wenigstens einen Meßsignals wie auch der Generierung entsprechender Meßwertesignale dienenden Meßgerät internen Betriebs- und Auswerteschaltung verbunden.

Bei einer Vielzahl von Feldgeräten der beschriebenen Art wird der Meßaufnehmer zum Erzeugen des Meßsignals im Betrieb zudem von einem von der Betriebs- und Auswerteschaltung zumindest zeitweise generierten Treibersignal so angesteuert, daß er in einer für die Messung geeigneten Weise zumindest mittelbar oder aber auch über eine das Medium direkt kontaktierende Sonde praktisch unmittelbar auf das Medium einwirkt, um dort mit der zu erfassenden Meßgröße entsprechend korrespondierende Reaktionen hervorzurufen. Das Treibersignal kann dabei beispielsweise hinsichtlich einer Stromstärke, einer Spannungshöhe und/oder einer Frequenz entsprechend geregelt sein. Als Beispiele für solche aktiven, also ein elektrisches Treibersignal im Medium entsprechend umsetzende Meßaufnehmer sind im besonderen dem Messen von zumindest zeitweise strömenden Medien dienende Durchfluß-Meßaufnehmer, z.B. mit wenigstens einer vom Treibersignal angesteuerten, Magnetfeld erzeugenden Spule oder wenigstens einem vom Treibersignal angesteuerten Ultraschallsender, oder aber auch dem Messen und/oder Überwachen von Füllständen in einem Behälter dienende Füllstands- und/oder Grenzstandsaufnehmer, wie z.B. mit freistrahlender Mikrowellenantenne, Gouboun-Leitung oder vibrierendem Tauchkörper, zu nennen.

Zur Aufnahme der Meßgerät-Elektronik umfassen Feldgeräte der beschriebenene ferner ein vergleichsweise robustes, insb. schlag-, druck-, und/oder wetterfestes, Elektronik-Gehäuse. Dieses kann, wie z.B. in der US-A 63 97 683 oder der WO-A 00/36379 vorgeschlagen, vom Feldgerät entfernt angeordnet und mit diesem nur über eine flexible Leitung verbunden sein; es kann aber auch, wie z.B. in der EP-A 903 651 oder der EP-A 1 008 836 gezeigt, direkt am Meßaufnehmer oder einem den Meßaufnehmer separat einhausenden Meßaufnehmer-Gehäuse angeordnet sein. Oftmals dient dann das Elektronik-Gehäuse, wie beispielsweise in der EP-A 984 248, der US-A 45 94 584, der US-A 47 16 770 oder der US-A 63 52 000 gezeigt, auch dazu, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Bei Meßgeräten der vorgenannten Art ist die jeweilige Meßgerät-Elektronik üblicherweise über entsprechende elektrische Leitungen an ein vom Meßgerät zumeist räumlich entfernt angeordnetes und zumeist auch räumlich verteiltes übergeordeneten elektronischen Datenverarbeitungssystem elektrisch angeschlossen, an das die vom jeweiligen Meßgerät erzeugten Meßwerte mittels eines diese entsprechend tragenden Meßwertesignals zeitnah weitergegeben werden.

Meßgeräte der beschriebenen Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des Meßgeräts erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßanordnungen zumeist auch direkt von solchen Leitrechnern aus überwacht und gegebenefalls gesteuert und/oder konfiguriert werden können, werden in entsprechender Weise über vorgenannte, zumeist hinsichlich der Übertragungsphysik und/oder der Übertragungslogik hybride Datenübertragungsnetzwerke dem Meßumformerspeise-Gerät und/oder dem Meßgerät zugewiesene Betriebsdaten gleichermaßen versendet. Dementsprechend dient das Datenverarbeitungssystem üblicherweise auch dazu, das vom Meßgerät gelieferte Meßwertesignal entsprechend den Anforderungen nachgelagerter Datenübertragungsnetzwerke zu konditionieren, beispielsweise geeignet zu digitaliseren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßgerät empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzewerke auf Basis des ETHERNET-Standards sowie die entsprechenden, zumeist übergereifend standardisierten Übertragungs-Protokolle.

Neben den für die Verarbeitung und Konvertierung der von den jeweils angeschlossenen Meßgeräten gelieferten Meßwerte erforderlichen Auswerteschaltungen weisen solche übergeordnete Datenverarbeitungssysteme zumeist auch der Versorgung der angeschlossenen Meßgräte mit elektrischer Energie dienende elektrische Versorgungsschaltungen auf, die eine entsprechende, ggf. direkt vom angeschlossenen Feldbus gespeiste, Versorgungsspannung für die jeweilige Meßgerät-Elektronik bereitstellen und die daran angeschlossenen elektrische Leitungen sowie die jeweiligen Meßgerät-Elektroniken durchfließende elektrische Ströme treiben. Eine Versorgungsschaltung kann dabei beispielsweise genau einem Meßgerät jeweils zugeordnet und zusammen mit der dem jeweiligen Meßgerät zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Weiterführende Beispiele für derartige, dem Fachmann an und für sich bekannte Meßgeräte oder auch solche Meßanordnungen , wie sie im Zusammenspiel von Meßgerät und einem entsprechenden Datenverarbeitungssystem gebildet sind, sind u.a. in der WO-A 03/048874, WO-A 02/45045, der WO-A 02/103327, der WO-A 02/086426, der WO-A 01/02816, der WO-A 00/48157, der WO-A 00/36 379, der WO-A 00/14 485, der WO-A 95/16 897, der WO-A 88/02 853, der WO-A 88/02 476, der US-B 71 34 348, der US-B 71 33 727, der US-B 70 75 313, der US-B 70 73 396, der US-B 70 32 045, der US-B 68 54 055, der US-B 67 99 476, der US-B 67 76 053, der US-B 67 69 301, der US-B 65 77 989, der US-B 66 62 120, der US-B 66 40 308, der US-B 65 74 515, der US-B 65 35 161, der US-B 65 12 358, der US-B 64 87 507, der US-B 64 80 131, der US-B 64 76 522, der US-B 63 97 683, der US-B 63 52 000, der US-B 63 11 136, der US-B 62 85 094, der US-B 62 69 701, der US-B 62 36 322, der US-A 61 40 940, der US-A 60 14 100, der US-A 60 06 609, der US-A 59 59 372, der US-A 57 96 011, der US-A 57 42 225, der US-A 57 42 225, der US-A 57 06 007, der US-A 56 87 100, der US-A 56 72 975, der US-A 56 04 685, der US-A 55 35 243, der US-A 54 69 748, der US-A 54 16 723, der US-A 53 63 341, der US-A 53 59 881, der US-A 52 31 884, der US-A 52 07 101, der US-A 51 31 279, der US-A 50 68 592, der US-A 50 65 152, der US-A 50 52 230, der US-A 49 26 340, der US-A 48 50 213, der US-A 47 68 384, der US-A 47 16 770, der US-A 46 56 353, der US-A 46 17 607, der US-A 45 94 584, der US-A 45 74 328, der US-A 45 24 610, der US-A 44 68 971, der US-A 43 17 116, der US-A 43 08 754, der US-A 38 78 725, der US-A 2006/0179956, der US-A 2006/0161359, der US-A 2006/0112774, der US-A 2006/0096390, der US-A 2005/0139015, der US-A 2004/0117675, der EP-A 1 158 289, der EP-A 1 147 463, der EP-A 1 058 093, der EP-A 984 248, der EP-A 591 926, der EP-A 525 920, der DE-A 44 12 388 oder der DE-A 39 34 007 ausführlich und detailliert beschrieben.

Bei modernen Meßgeräten der in Rede stehenden Art handelt es sich oftmals um so genannte Zweileiter-Feldgeräte, also solche Meßgeräte, bei denen die Meßgerät-Elektronik mit dem übergeordneten Datenverarbeitungssystem lediglich über ein einziges Paar Leitungen elektrisch verbunden ist und bei denen sowohl die von extern in das Meßgerät eingespeiste elektrische Energie als auch der vom Meßgerät erzeugte Meßwert über das einzige Paar elektrischer Leitungen übertragen werden. Oftmals dient im Falle von Zweileiter-Feldgeräten der von der externen Versorgungsspannung getrieben Strom, der im Betrieb in der mittels des Leitungspaares gebildeten Stromschleife fließt und seitens des Meßgeräts mittels Lastmodulation entsprechend eingestellt ist, als die Meßwerte tragender Signalträger. In zahlreichen industriellen Anwendungen hat sich hierbei im besonderen etabliert, das eine Paar Verbindungsleitung als sogenannte 4 mA bis 20 mA-Stromschleife auszubilden. Dabei wird der der momentane Meßwert bekanntlich analog mittels einer momentan eingestellten Stromstärke dargestellt, die innerhalb eines vorgegebenen Bereichs zwischen 4 mA und 20 mA (= Milliampere) liegt. Die Meßgerät-Elektronik umfaßt dafür üblicherweise jeweils einen vom (Schleifen-) Strom durchflossenen Stromregler zum Einstellen oder Modulieren, ggf. auch Takten des Stroms, eine interne Betriebs- und Auswerteschaltung zum Steuern des Meßgeräts, sowie eine an einer von der Versorgungsspannung abgeteilten internen Eingangsspannung der Meßgerät-Elektronik anliegende, die interne Betriebs- und Auswerteschaltung speisende interne Versorgungsschaltung mit wenigstens einem von einem veränderlichen Teilstrom des (Schleifen-) Stroms durchflossenen Spannungsregler, der eine auf einem vorgebbaren Spannungsniveau im wesentlichen konstant geregelten interne Nutzspannung in der Meßgerät-Elektronik bereitstellt. Beispiele für solche Zweileiter-Feldgeräte können u.a. der WO-A 03/048874, WO-A 02/45045, der WO-A 02/103327, der WO-A 00/48157, WO-A 00/26739, der WO-A 94/20940, der US-B 67 99 476, der US-B 65 77 989, der US-B 66 62 120, der US-B 65 74 515, der US-B 65 35 161, der US-B 65 12 358, der US-B 64 80 131, der US-B 63 11 136, der US-B 62 85 094, der US-B 62 69 701, der US-A 61 40 940, der US-A 60 14 100, der US-A 59 59 372, der US-A 57 42 225, der US-A 56 72 975, der US-A 55 35 243, der US-A 54 16 723, der US-A 52 07 101, der US-A 50 68 592, der US-A 50 65 152, der US-A 49 26 340, der US-A 46 56 353, der US-A 43 17 116, der US-A 2006/0161359, der US-A 2004/0117675, der EP-A 1 147 841, der EP-A 1 058 093, der EP-A 591 926, der EP-A 525 920, der DE-A 44 12 388 oder der DE-A 39 34 007 entnommen werden.

Ein besonderes Problem von solchen Zweileiter-Feldgeräten besteht insoweit aber darin, daß praktisch nur ein einziger physikalischer Informationsträger - hier der im Leitungspaar fließende Strom bzw. dessen Stromstärke - für die zu übertragenden Meßwerte vorgesehen ist und daß infolgedessen momentan immer nur genau ein einziger Meßwert des jeweiligen Meßgeräts in der via Leitungspaar angeschlossenen übergeordneten Auswerteinheit ausgewertet werden kann. Anders gesagt, können bei solchen Zweileiter-Feldgeräten mehrere Meßwerte - seien es nun gleich- und/oder verschiedenartige - allenfalls sequentiell in Echzeit übertragen werden. Für den durchaus des öfteren einteretenden Fall aber, daß es sich bei dem Feldgerät um ein multivariables Meßgerät handelt, beispielsweise einen Coriolis-Massendurchfluß-/ Dichtemesser, das in der Lage ist, Meßwerte von verschiedener Art, beispielsweise den momentanen und/oder zeitlich aufintegrierten Massendurchfluß, die momentane Dichte und/oder eine momentane Viskosität des Mediums, mit hoher Aktualisierungsrate hochgenau und quasi parallel zu ermitteln, würde also das Potential dieses Meßgeräts infolge der Beschränkung durch die herkömmliche, eigentlich sehr vorteilhafte Zweileiter-Technologie nicht in vollem Maße genutzt werden können.

Ein weiteres Problem von solchen in Zweileiter-Technologie realisierten Meßgeräten besteht zudem darin, daß die von der Meßgerät-Elektronik tatsächlich umzusetzende elektrisch Leistung - kurz "verfügbare Leistung" - während des Betriebes infolge von zeitlichen Änderungen der Meßgrößen in praktisch unvorhersehbarer Weise über einen weiten Bereich schwanken kann. Infolge dessen darf sicher nur mit der bei minimalen nominellen Strom, z.B. etwa 4 mA, "verfügbaren" Leistung als nominelle Leistung gerechnet werden.

Erschwerend kommt hinzu, daß eine Vielzahl von modernen Feldgeräten der vorgenannten Art ferner elektrisch so ausgebildet sein müssen, daß sie den Forderungen nach Explosionssicherheit genügen. Im besonderen werden solche Feldgeräte bei geforderderter intrinsischer Explosionssicherheit mit einer solch niedrigen elektrischen "verfügbaren" Leistung betrieben, daß mangels des Erreichens der Zündbedingungen Funken oder Lichtbogen elektrisch nicht ausgelöst werden können, wobei in die gesamte Energie- und Leistungsbilanz auch die direkt im Meßgerät allenfalls gespeicherte elektrische Energie mit einzubeziehen ist. Infolgedessen ist auch das Speichern von gelegentlich überschüssiger elektrischer Energie nur in sehr begrenztem, zumeist nur unzureichendem Maße möglich. Eigensicherer Explosionsschutz ist beispielsweise nach den Europäischen Normen EN 50 014 und EN 50 020 gegeben, wenn elektronische Vorrichtungen so ausgebildet sind, dass sie der darin definierten Zündschutzart "Eigensicherheit (Ex-i)" genügen. Entsprechend dieser Zündschutzart dürfen also im Feldgerät auftretende elektrische Ströme, Spannungen und Leistungen zu jeder Zeit vorgegebene Strom-, Spannungs- und Leistungsgrenzwerte nicht überschreiten. Diese drei Grenzwerte sind-so gewählt, daß im Fehlerfall, beispielsweise bei Kurzschluß in der Meßgerät-Elektronik, der maximal freigesetzte Energiebetrag nicht dazu ausreicht, einen zündfähigen Funken zu erzeugen. Üblicherweise darf bei eigensicheren Feldgeräten die elektrische Leistung 1 W (= Watt) nicht übersteigen. Die Spannung kann z.B. durch Z-Dioden, der Strom z.B. durch Widerstände und oder Sicherungen und die Leistung durch entsprechende Kombination von spannungs- und strombegrenzenden Komponenten und/oder entsprechenden Leistungsreglern unter den vorgegebenen Grenzwerten gehalten werden. Gegebenfalls können auch, wie z.B. in der US-B 71 13 375 beschrieben, entsprechende Sicherheitsschaltungen in den jeweiligen Meßgerät-Elektroniken vorgesehen sein, die zudem ein automatisches Abschalten zumindest von fehlerbehaften und/oder fehlerverursachenden Komponenten oder Baugruppen der Meßgerät-Elektronik ermöglichen.

Dem zeitweisen Mangel an verfügbarer Leistung Rechnung tragend sind moderne Zweileiter-Meßgeräte, insb. solche mit (4 mA bis 20 mA)-Stromschleife, daher teilweis so ausgelegt, daß ihre mittels eines in der Auswerte- und Betriebsschaltung vorgesehenen Mikrocomputers realisierte Geräte-Funktionalität änderbar ist, und insofern die zumeist ohnehin wenig Leistung umsetzende Betriebs- und Auswerteschaltung an die momentan verfügbare Leistung angepaßt werden kann. Gegebenfalls können auch einzelen Schaltungskomponenten der jeweiligen Meßgerät-Elektronik im Betrieb in einen weniger Leistung benötigenden Bereitschaftsmodus versetzt oder bei Bedarf zeitweise ganz abgeschaltet werden. Weitere Lösungen zur Realisierung von Meßanordnungen bei den einerseits das ggf. eigensicher ausgebildete Meßgerät permanent mit elektrischer Leistung versorgt und anderseits an die innerhalb des übergeordneten Datenverarbeitungssystem im Zusammenspiel von Versorgungs- und Auswerteschaltungen gebildeten Zweileiter-Schnittstellen angeschlossene werden kann, sind beispielsweise in der US-B 66 84 340 oder US-B 64 72 884 Meßanordnungen vorgeschlagen. Demnach ist das Meßgeräte jeweils über zwei jeweils als Zweileiter-Stromscflleifen ausgebildete Leitungspaare von entsprechenden externen Versorgungsschaltungen mit elektrischer Energie gespeist, wobei die in den Leitungspaaren jeweils fließenden veränderlichen Ströme voneinander weitgehend unabhängig durch das jeweilige Meßgerät geregelt sind. Ferner ist bei den vorgeschlagenen Meßanordnungen vorgesehen, daß die momentane Stromstärke eines der Ströme in Abhängigkeit vom zu übertragenden Meßwert eingestellt ist, während die momentane Stromstärke des jeweils anderen Stromes im wesentlichen in Abhängigkeit vom momentanen Energiebedarf des Meßgeräts eingstellt ist.

Ausgehend von den vorangehend diskutierten Nachteilen solcher, mittels herkömmlicher, zumeist eigensicherer Zweileiter-Meßgeräten und entsprechenden übergeordneten Datenverarbeitungssystemen gebildeten Meßanordnungen besteht eine Aufgabe der Erfindung nunmehr darin, Meßanordnungen der in Rede stehenden Art zum einen dahingehend zu verbessern, daß die darin verwendeten Meßgeräte in der Lage sind, gleichzeitig mehr als einen Meßwert, insb. auch mehrere Meßwerte von verschiedener Art, leitungsgebunden ausgeben und an das übergeordnete Datenverarbeitungssystem übertragen zu können. Zum anderen soll das Meßgerät, falls erforderlich, aber auch nach wie vor in ausreichendem Maße explosionssicher, insb. eigensicher, ausgebildet werden können. Darüberhinaus sollen das Meßgerät wie auch die damit schließlich gebildete Meßanordnung so ausgebildet sein, daß sie in bestehende industrielle Anlagen und Datenverarbeitungssysteme möglichst einfach eingegliedert werden können, und zwar unter möglichst weitgehender Beibehaltung von Konzeption und Infrastruktur herkömmlicher industrieller Datenübertragungsnetzwerke, insb. auch bereits vorhandener Feldbussysteme. Zudem soll dabei möglichst auch die auf der Seite der Datenverarbeitungssystemen, insb. in betriebsbewährter Zweileiter-Technologie, bereits installierte Basis weitgehend nutzbar sein, möglichst auch ohne umfangreiche Umbaumaßnahmen innerhalb des bestehenden Datenverarbeitungssystems oder Änderung des jeweils installierten Datenübertragungsnetzwerks.

Zur Lösung der Aufgabe besteht die Erfindung in einer Meßanordnung nach Anspruch 1 zum Erfassen chemischer und/oder physikalischer Meßgrößen, insb. von strömungsfähigen und/oder schüttfähigen Medien, welche Meßanordnung wenigstens ein Meßgerät, das mittels einer internen Meßgerät-Elektronik im Betrieb wiederholt die wenigstens eine zu erfassende Meßgröße repräsentierende, insb. digitale, Meßwerte generiert, sowie ein dem wenigstens einen Meßgerät übergeordenetes, insb. räumlich verteiltes und/oder vom Meßgerät räumlich entferntes, elektronisches Datenverarbeitungssystem umfaßt. Bei der erfindungsgemäßen Meßanordnung sind Meßgerät und Datenverarbeitungssystem mittels wenigstens eines im Betrieb zumindest zeitweise von einem ersten Strom durchflossen ersten Leitungspaares und mittels wenigstens eines im Betrieb zumindest zeitweise von einem zweiten Strom durchflossen zweiten Leitungspaares miteinander verbunden. Ferner ist bei der erfindungsgemäßen Meßanordnung vorgesehen, daß das Meßgerät die intern generierten Meßwerte zumindest teilweise über das erste Leitungspaar und zumindest teilweise über das zweite Leitungspaar an das Datenverarbeitungssystem übermittelt.

Darüberhinaus besteht die Erfindung in einem, zur Verwirklichung vorgenannter Meßanordnung geeigneten, Meßgerät nach Anspruch 1 mit einen auf Änderungen wenigstens einer physikalischen oder chemischen Meßgröße reagierenden Meßaufnehmer, der wenigstens ein von der wenigstens einen Meßgröße beeinflußtes Meßsignal liefert, und mit einem an den Meßaufnehmer angeschlossene Meßgerät-Elektronik. Beim erfindungsgemäßen Meßgerät ist ferner vorgesehen, daß die Meßgerät-Elektronik zum Betrieb mittels wenigstens eines ersten Leitungspaares und mittels wenigstens eines zweiten Leitungspaares an ein übergeordenetes, insb. räumlich verteiltes und/oder vom Meßgerät räumlich entferntes, elektronisches Datenverarbeitungssystem anschließbar ist. Zudem ist die Meßgerät-Elektronik dafür ausgelegt, im Betrieb eine Vielzahl von zumindest anteilig die wenigstens eine Meßgröße repräsentierenden, insb. digitalen, Meßwerten zu generieren, und diese zumindest teilweise via erstes Leitungspaar und zumindest teilweise via zweites Leitungspaar an das angeschlossene Datenverarbeitungssystem zu übermitteln.

Nach einer ersten Ausgestaltung der Meßanordnung der Erfindung ist vorgesehen, daß das Meßgerät intern generierte Meßwerte an das Datenverarbeitungssystem übermittelt, das Meßgerät es eine Stromstärke des zumindest zeitweise durch das erste Leitungspaar fließenden Stromes einstellt. Weiterbildend ist bei dieser Ausgestaltung der Erfindung vorgesehen, daß das Meßgerät den im ersten Leitungspaar fließenden Strom innerhalb eines vorgegebenen Stromstärke-Bereichs, insb. innerhalb eines Stromstärke-Bereichs zwischen 4 mA und 20 mA, variiert. Nach einer anderen Weiterbildung der Erfindung ist vorgesehen, daß das Meßgerät intern generierte Meßwerte an das Datenverarbeitungssystem übermittelt, indem das Meßgerät den im ersten Leitungspaar fließenden Strom taktet, beispielsweise indem das Meßgerät eine Taktfrequenz und/oder eine Pulsweite des im ersten Leitungspaar fließenden Strom variiert.

Nach einer zweiten Ausgestaltung der Meßanordnung der Erfindung ist vorgesehen, daß das Meßgerät intern generierte Meßwerte an das Datenverarbeitungssystem übermittelt, das Meßgerät es eine Stromstärke des zumindest zeitweise durch das zweite Leitungspaar fließenden Stromes einstellt. Weiterbildend ist bei dieser Ausgestaltung der Erfindung vorgesehen, daß das Meßgerät den im zweiten Leitungspaar fließenden Strom innerhalb eines vorgegebenen Stromstärke-Bereichs, insb. innerhalb eines Stromstärke-Bereichs zwischen 4 mA und 20 mA, variiert. Nach einer anderen Weiterbildung der Erfindung ist vorgesehen, daß das Meßgerät intern generierte Meßwerte an das Datenverarbeitungssystem übermittelt, indem das Meßgerät den im zweiten Leitungspaar fließenden Strom taktet, beispielsweise indem das Meßgerät eine Taktfrequenz und/oder eine Pulsweite des im zweitenLeitungspaar fließenden Strom variiert.

Nach einer dritten Ausgestaltung der Meßanordnung der Erfindung ist vorgesehen, daß das Datenverarbeitungssystem wenigstens eine Versorgungsspannung bereitstellt, die zumindest den durch das erste Leitungspaar fließenden Strom treibt. Die Erfindung weiterbildend ist bei dieser Ausgestaltung ferner vorgesehen, daß die wenigstens eine Versorgungsspannung sowohl den durch das erste Leitungspaar als auch den durch das zweite Leitungspaar fließenden Strom treibt.

Nach einer vierten Ausgestaltung der Meßanordnung der Erfindung ist vorgesehen, daß das Datenverarbeitungssystem wenigstens eine erste Versorgungsspannung bereitstellt, die zumindest zeitweise den durch das erste Leitungspaar fließenden ersten Strom treibt, und daß das Datenverarbeitungssystem wenigstens eine zweite Versorgungsspannung bereitstellt, die zumindest zeitweise den durch das zweite Leitungspaar fließenden zweiten Strom treibt.

Nach einer fünften Ausgestaltung der Meßanordnung der Erfindung ist vorgesehen, daß wenigstens der erste Strom zumindest anteilig, insb. gänzlich, auch der Versorgung des Meßgeräts mit elektrischer Energie dient.

Nach einer sechsten Ausgestaltung der Meßanordnung der Erfindung ist vorgesehen, daß jeder der beiden Ströme zumindest zeitweise und/oder zumindest anteilig auch der Versorgung des Meßgeräts mit elektrischer Energie dient.

Nach einer siebenten Ausgestaltung der Meßanordnung der Erfindung ist vorgesehen, daß das Meßgerät seinen momentanen Energiebedarf zumindest anteilig mittels des ersten Stroms deckt.

Nach einer achten Ausgestaltung der Meßanordnung der Erfindung ist vorgesehen, daß das Meßgerät seinen momentanen Energiebedarf zumindest anteilig mittels des ersten Stroms und zumindest anteilig mittels des zweiten Stroms deckt.

Nach einer neunten Ausgestaltung der Meßanordnung der Erfindung ist vorgesehen, daß das Meßgerät seinen momentanen Energiebedarf vollständig mittels des ersten und zweiten Stroms deckt.

Nach einer zehnten Ausgestaltung der Meßanordnung der Erfindung ist vorgesehen, daß in den Verlauf des ersten und/oder in den Verlauf des zweiten Leitungspaares, insb. eingangs der Meßgerät-Elektronik, Spannungsbegrenzer geschaltet sind, die eine eingangs der Meßgerät-Elektronik allfällige anliegende elektrische Überspannung auf einen zulässigen Maximalwert begrenzen.

Nach einer elften Ausgestaltung der Meßanordnung der Erfindung ist vorgesehen, daß in den Verlauf des ersten und/oder in den Verlauf des zweiten Leitungspaares, insb. eingangs der Meßgerät-Elektronik, Strombegrenzer geschaltet sind, die einen im jeweiligen Leitungspaar allfällig fließenden Kurzschlußstrom auf einen zulässigen Maximalwert begrenzen.

Nach einer zwölften Ausgestaltung der Meßanordnung der Erfindung ist vorgesehen, daß das erste Leitungspaar vom zweiten Leitungspaar zumindest innerhalb der Meßgerät-Elektronik galvanisch getrennt und/oder räumlich separiert, insb. abgeschottet oder abgekapselt, ist.

Nach einer dreizehnten Ausgestaltung der Meßanordnung der Erfindung umfaßt dieses weiters wenigstens einen auf Änderungen zumindest der wenigstens einen zu erfassenden Meßgröße reagierenden Meßaufnehmer, der wenigstens ein zumindest mit dieser Meßgröße korrespondierendes Meßsignal an die Meßgerät-Elektronik liefert. Weiterbildend ist vorgesehen, daß die Meßgerät-Elektronik des Meßgeräts, die Meßwerte zumindest teilweise unter Verwendung des wenigstens einen Meßsignals erzeugt.

Nach einer vierzehnten Ausgestaltung der Meßanordnung der Erfindung umfaßt dieses weiters wenigstens einen auf Änderungen einer zu erfassenden Meßgröße erster Art, beispielsweise einen Massendurchfluß eines in einer angeschlossenen Rohrleitung strömmenden Mediums, und wenigstens einer zu erfassenden Meßgröße zweiter Art, beispielsweise eine Dichte oder eine Viskosität eines in einer angeschlossenen Rohrleitung strömmenden Mediums, reagierenden Meßaufnehmer, der wenigstens ein zumindest mit der Meßgröße erster Art korrespondierendes Meßsignal an die Meßgerät-Elektronik liefert. Die Erfindung weiterbildend ist ferner vorgesehen, daß das wenigstens eine vom Meßaufnehmer gelieferte Meßsignal auch die Meßgröße zweiter Art repräsentiert. Alternativ oder in Ergänzung dazu ist vorgesehen, das der Meßaufnehmer wenigstens ein erstes und ein zweites Meßsignal liefert. Desweiteren ist vorgesehen, daß die Meßgerät-Elektronik die Meßwerte zumindest teilweise unter Verwendung des ersten und des zweiten Meßsignals erzeugt.

Nach einer fünfzehnten Ausgestaltung der Meßanordnung der Erfindung umfaßt dieses weiters ein die Meßgerät-Elektronik einhausendes Elektronik-Gehäuse.

Nach einer sechzehnten Ausgestaltung der Meßanordnung der Erfindung umfaßt dieses weiters ein den Meßaufnehmer zumindest teilweise einhausendes Meßaufnehmer-Gehäuse.

Nach einer siebzehnten Ausgestaltung der Meßanordnung der Erfindung umfaßt dieses weiters ein die Meßgerät-Elektronik einhausendes Elektronik-Gehäuse sowie ein den Meßaufnehmer zumindest teilweise einhausendes Meßaufnehmer-Gehäuse, wobei Meßaufnehmer-Gehäuse und Elektronik-Gehäuse miteinander mechanisch, insb. im wesentlichen starr, verbunden sind.

Nach einer achtzehnten Ausgestaltung der Meßanordnung der Erfindung ist vorgesehen, daß das Meßgerät und Datenverarbeitungssystem weiters mittels wenigstens eines dritten Leitungspaares miteinander verbunden sind, das im Betrieb zumindest zeitweise von einem dritten Strom durchflossen ist. Gemäß einer Weiterbildung dieser Ausgestaltung der Erfindung ist ferner vorgeshen, daß das Meßgerät die intern generierten Meßwerte zumindest teilweise auch über das dritte Leitungspaar an das Datenverarbeitungssystem übermittelt.

Nach einer neunzehnten Ausgestaltung der Meßanordnung der Erfindung ist vorgesehen, daß das Datenverarbeitungssystem weiters wenigstens eine mit zumindest einem der Leitungspaare kommunizierende Auswerteschaltung zum Erfassen von vom Meßgerät übermittelten Meßwerten umfaßt.

Nach einer zwanzigsten Ausgestaltung der Meßanordnung der Erfindung ist vorgesehen, daß das Datenverarbeitungssystem weiters wenigstens einen dem Übertragen digitaler Meßwerte dienenden, insb. seriellen, Feldbus umfaßt.

Nach einer einundzwanzigsten Ausgestaltung der Meßanordnung der Erfindung umfaßt das Datenverarbeitungssystem weiters wenigstens eine mit zumindest einem der Leitungspaare kommunizierende Auswerteschaltung zum Erfassen von vom Meßgerät übermittelten Meßwerten sowie wenigstens einen dem Übertragen digitaler Meßwerte dienenden, insb. seriellen, Feldbus, wobei die wenigstens eine Auswerteschaltung an den wenigstens einen Feldbus gekoppelt ist.

Nach einer zweiundzwanzigsten Ausgestaltung der Meßanordnung der Erfindung ist vorgesehen, daß das Datenverarbeitungssystem weiters wenigstens einen zumindest zeitweise vom ersten Strom durchflossen ersten Meßwiderstand aufweist.

Nach einer dreiundzwanzigsten Ausgestaltung der Meßanordnung der Erfindung ist vorgesehen, daß das Datenverarbeitungssystem weiters wenigstens eine Auswerte-Schaltung zum Erfassen von vom Meßgerät übermittelten Meßwerten umfaßt, die zumindest zeitweise eine mit dem ersten Strom korrespondierende, im wesentlichen über dem ersten Meßwiderstand abfallende Meßspannung erfaßt. Diese Ausgestaltung der Erfindung weiterbildend ist ferner vorgesehen, daß das Datenverarbeitungssystem weiters wenigstens einen zumindest zeitweise vom zweiten Strom durchflossen zweiten Meßwiderstand aufweist. Ferner ist vorgesehen, daß das Datenverarbeitungssystem weiters wenigstens eine Auswerte-Schaltung zum Erfassen von vom Meßgerät übermittelten Meßwerten umfaßt, die zumindest zeitweise eine mit dem zweiten Strom korrespondierende, im wesentlichen über dem zweiten Meßwiderstand abfallende Meßspannung erfaßt.

Nach einer vierundzwanzigsten Ausgestaltung der Meßanordnung der Erfindung ist vorgesehen, daß das Datenverarbeitungssystem weiters eine mit dem ersten Leitungspaar kommunizierende erste Auswerte-Teilschaltung zum Erfassen von via erstes Leitungspaar übermittelten Meßwerten sowie eine mit dem zweiten Leitungspaar kommunizierende zweite Auswerte-Teilschaltung zum Erfassen von via zweites Leitungspaar übermittelten Meßwerten umfaßt. Diese Ausgestaltung der Erfindung weiterbildend ist ferner vorgesehen, daß die erste Auswerte-Schaltung zumindest zeitweise eine Meßspannung erfaßt, die im wesentlichen über einem vom ersten Strom durchflossenen Meßwiderstand abfällt, und/oder daß die zweite Auswerte-Teilschaltung zumindest zeitweise eine Meßspannung erfaßt, die im wesentlichen über einem vom zweiten Strom durchflossenen Meßwiderstand abfällt.

Nach einer ersten Ausgestaltung des Meßgeräts der Erfindung ist vorgesehen, daß die Meßgerät-Elektronik und das erste Leitungspaar im Betrieb zumindest zeitweise von einem seitens des Datenverarbeitungssystems getriebenen ersten Strom durchflossen sind.

Nach einer zweiten Ausgestaltung des Meßgeräts der Erfindung ist vorgesehen, daß die Meßgerät-Elektronik und das zweite Leitungspaar im Betrieb zumindest zeitweise von einem, insb. seitens des Datenverarbeitungssystems getriebenen, zweiten Strom durchflossen sind.

Nach einer dritten Ausgestaltung des Meßgeräts der Erfindung ist vorgesehen, daß wenigstens der erste Strom zumindest anteilig, insb. gänzlich, auch der Versorgung des Meßgeräts mit elektrischer Energie dient.

Nach einer vierten Ausgestaltung des Meßgeräts der Erfindung ist vorgesehen, daß jeder der beiden Ströme zumindest zeitweise und/oder zumindest anteilig auch der Versorgung des Meßgeräts mit elektrischer Energie dient.

Nach einer fünften Ausgestaltung des Meßgeräts der Erfindung ist vorgesehen, daß das Meßgerät im Betrieb seinen Energiebedarf zumindest anteilig mittels des ersten Stroms deckt.

Nach einer sechsten Ausgestaltung des Meßgeräts der Erfindung ist vorgesehen, daß das Meßgerät im Betrieb seinen Energiebedarf zumindest anteilig mittels des ersten Stroms und zumindest anteilig mittels des zweiten Stroms deckt.

Nach einer siebenten Ausgestaltung des Meßgeräts der Erfindung ist vorgesehen, daß wobei das Meßgerät im Betrieb seinen Energiebedarf zumindest zeitweise vollständig mittels des ersten Stroms und/oder mittels zweiten Stroms deckt.

Nach einer achten Ausgestaltung des Meßgeräts der Erfindung ist vorgesehen, daß innerhalb der Meßgerät-Elektronik Spannungsbegrenzer in den Verlauf des ersten und/oder des zweiten Leitungspaares geschaltet sind, die eine, insb. eingangs, in der Meßgerät-Elektronik allfällige anliegende elektrische Überspannung auf einen zulässigen Maximalwert begrenzen.

Nach einer neunten Ausgestaltung des Meßgeräts der Erfindung ist vorgesehen, daß innerhalb der Meßgerät-Elektronik Strombegrenzer in den Verlauf des ersten und/oder des zweiten Leitungspaares geschaltet sind, die einen im jeweiligen Leitungspaar allfällig fließenden Kurzschlußstrom auf einen zulässigen Maximalwert begrenzen.

Nach einer zehnten Ausgestaltung des Meßgeräts der Erfindung ist vorgesehen, daß das erste Leitungspaar zumindest innerhalb der Meßgerät-Elektronik vom zweiten Leitungspaar galvanisch getrennt und/oder räumlich separiert, insb. abgeschottet oder abgekapselt, ist.

Nach einer elften Ausgestaltung des Meßgeräts der Erfindung ist vorgesehen, daß in der Meßgerät-Elektronik wenigstens ein Übertrager zur galvanischen Trennung der beiden Leitungspaare vorgesehen ist.

Nach einer zwölften Ausgestaltung des Meßgeräts der Erfindung ist vorgesehen, daß in der Meßgerät-Elektronik wenigstens ein Optokoppler zur galvanischen Trennung der beiden Leitungspaare vorgesehen ist.

Nach einer dreizehnten Ausgestaltung des Meßgeräts der Erfindung ist vorgesehen, daß die Meßgerät-Elektronik einen primärseitg an das erste Leitungspaar angeschlossenen ersten Spannungskonverter und einen primärseitg an das zweite Leitungspaar angeschlossenen zweiter Spannnungskonverter aufweist. Diese Ausgestaltung der Erfindung weiterbildend ist ferner vorgesehen, daß die beiden Spannungskonverter sekundärseitig miteinander elektrisch gekoppelt, insb. galvanisch verbunden, sind. Nach einer anderen Weiterbildung dieser Ausgestaltung ist vorgesehen, daß die beiden Spannungskonverter im Betrieb im wesentlichen gleichfrequent getaktet sind. Ferner kann es hierbei von Vorteil sein, wenn die beiden Spannungskonverter im Betrieb außerphasig, insb. gegenphasig, getaktet sind. Alternativ dazu können die beiden Spannungskonverter im Betrieb gegebenenfalls durchaus aber auch asynchron getaktet sein.

Nach einer vierzehnten Ausgestaltung des Meßgeräts der Erfindung vorgesehen, daß die Meßgerät-Elektronik des Meßgeräts, die Meßwerte zumindest teilweise unter Verwendung des wenigstens einen Meßsignals erzeugt.

Nach einer fünfzehnten Ausgestaltung des Meßgeräts der Erfindung ist vorgesehen, daß der Meßaufnehmer auf Änderungen einer zu erfassenden Meßgröße erster Art und wenigstens einer zu erfassenden Meßgröße zweiter Art reagiert. Diese Ausgestaltung weiterbildend ist ferner vorgesehen, daß das wenigstens eine vom Meßaufnehmer gelieferte Meßsignal sowohl die Meßgröße erster Art als auch die Meßgröße zweiter Art repräsentiert. Alternativ oder in Ergänzung dazu liefert gemäß einer anderen Weiterbildung der Erfindung der Meßaufnehmer wenigstens ein erstes und ein zweites Meßsignal. Ferner ist hierbei vorgesehen, daß die Meßgerät-Elektronik die Meßwerte zumindest teilweise unter Verwendung des ersten und des zweiten Meßsignals erzeugt.

Nach einer sechzehnten Ausgestaltung des Meßgeräts der Erfindung ist vorgesehen, daß das Meßgerät weiters ein die Meßgerät-Elektronik einhausendes Elektronik-Gehäuse umfaßt. Nach einer Weiterbildung dieser Ausgestaltung der Erfindung umfaßt das Meßgerät weiters ein den Meßaufnehmer zumindest teilweise einhausendes Meßaufnehmer-Gehäuse und sind das Meßaufnehmer-Gehäuse und das Elektronik-Gehäuse miteinander mechanisch, insb. starr, verbunden sind.

Ein Grundgedanke der Erfindung besteht darin darin, Meßgerät der beschriebenen Art einerseits in die zu versetzen Lage, gleichzeitig und voneinander weitgehend unabhängig mehere Meßwerte, insb. auch solche von verschiedener Art, leitungsgebunden auszugeben und voneinander unabhängig an das übergeordnete Datenverarbeitungssystem übertragen zu können. Andererseits soll das Meßgerät, falls erforderlich, aber auch nach wie vor in ausreichendem Maße explosionssicher, insb. eigensicher, ausgebildet und/oder seitens des übergeordneten Datenverarbeitungsssystems mittels entsprechender Versorgungs- und Auswerteschaltungen in herkömmlicher Zweileiter-Technologie betrieben werden können.

Ein Vorteil der Erfindung ist u.a. darin zu sehen, daß das Meßgerät wie auch die damit gebildete Meßanordnung so ausgelegbar sind, daß sie prinzipiell auch in bereits bestehende Infrastrukturer herkömmlicher industrieller Datenübertragungsnetzwerke, insb. auch bereits vorhandener Feldbussysteme, sehr einfach eingegliedert werden können und somit auch ohne weiteres in bestehende industrielle Anlagen und herkömmliche Datenverarbeitungssysteme integrierbar sind. Dabei könen auch die hinsichtlich Datenübertragung und- verarbeitung in solchen Anlagen implementierten und etablierten Konzeptionen weitgehend unverändert beibehalten werden.

Ferner kann das Meßgerät dabei, insb. bei Verwendung zweier herkömmlicher Zweileiter-Stromschleifen als Leitungspaare, so ausgebildet werden, daß es über jede der wenigstens zwei Leitungspaare an herkömmliche Feldbusadapter oder dergleichen und insoweit praktisch direkt an herkömmliche Feldbusse, wie z.B. FOUNDATION FIELDBUS, angeschlossen werden kann.

Aufgrund dessen, daß dabei die auf der Seite der Datenverarbeitungssystemen, insb. in betriebsbewährter Zweileiter-Technologie, bereits installierte Basis weitgehend nutzbar ist, kann zumindest für den durchaus üblichen Fall, daß im Datenverarbeitungssystem freie Anschlußplätze für Zweileiter-Meßgeräte bereits vorinstalliert und somit in ausreichendem Maße vorhanden sind, kann die Meßanordnung ohne weiteres praktisch unverzüglich in Betrieb genommen werden. Anderenfalls stellt aber auch ein Nachrüsten der erforderlichen Anschlußplätze innerhalb eines bereits bestehenden Datenverarbeitungssystems keine umfangreiche Umbaumaßnahmen oder erhebliche Änderung des jeweils installierten Datenübertragungsnetzwerks dar.

Ein weiterer Vorteil der Erfindung besteht darin, daß das Meßgerät ohne weiteres auch mit elektrischer Kleinleistung betrieben werden kann. Zudem können auch die ggf. einschlägigen diversen Explosionsschutz-Vorschriften sowohl für das Meßgerät als auch für die im Zusammenspiel mit dem angeschlossenen Datenverarbeitungssystem gebildete Meßanordnung z.B. dadurch ohne weiteres eingehalten werden, daß die Meßgerät-Elektronik mittels voneinander räumlich und/oder galvanisch ausreichend getrennt gehaltenen Schaltungssegmenten gebildet ist und/oder daß die einzelnen Schaltungssegmente der Meßgerät-Elektronik gleichzeitig über jeweils ein einziges der wenigstens zwei Leitungspaare gespeist ist, wobei jedes dieser Leitungspaare über zugehörige die elektrische Leistung eingangsseitig entsprechend begrenzende Schaltungskomponenten geführt ist. Die Leistungsbegrenzer können gegebenenfalls, wie beispielsweise auch in der US-B 71 113 375 vorgeschlagen, miteinander gekoppelt sein und somit im Fehlerfall entlang einer der Verbindungsleitungen gleichzeitig auf beide Leitungspaare leistungsbegrenzend einwirken. Alternativ oder in Ergänzung zu einer leitungsbezogen separaten internen Spannungsversorgung und Leistungsbegrenzung können die wenigstens zwei, gegebenenfalls eingangs einzeln im vorgenannten Sinne leistungsbegrenzten Leitungspaare beispielsweise mittels entsprechender DC/DC-Wandler, beipielsweise mittels eine sekundärseitig jeweils angeschlossene weiteren Spannungsreglers, zu einer gemeinsamen interne Spannungsversorgung zusammengeschaltet werden. Falls erforderlich kann diese Spannungsversorgung - alternativ oder in Ergänzung zur vorgenannten separarten eingangseitigen Leistungsbegrenzung - hinsichtlich der maximalen elektrischen Leistung entsprechend den Vorschriften begrenzt werden. Durch geeignete Dimensionierung der im einzelnen verwendeten Leistungsbegrenzer auf das oben erwähnte Kleinleistungsniveau ist somit auch möglich, das Meßgerät auch für einen Einsatz in solchen explosionsgefährdeten Umgebungen geeignet, in denen lediglich Geräte von intrinsischer Sicherheit erlaubt sind. Umgekehrt kann die dem Meßgerät nominell zur Verfügung stehende mininmale elektrische Leistung im Vergleich zu herkömmlichen Zweileiter-Meßgeräten zumindest bei Verwendung zweier herkömmlicher Zweileiter-Stromschleifen als Leitungspaare dadurch praktisch verdoppelt werden, das jede der Verbindungsleitungen nicht nur zur Übermittlung von Meßwerten sondern auch, wie beispielsweise in der eingangs erwähnte US-B 66 84 340 vorgeschlagenen, zum Einspeisen von elektrischer Energie in das Meßgerät genutzt wird.

Die Erfindung wird nun anhand von Ausführungsbeispielen sowie den Figuren der Zeichnung näher erläutert. Funktionsgleiche Teile sind in den einzelnen Figuren mit denselben Bezugszeichen versehen, die jedoch nur dann wiederholt sind, wenn es sinnvoll erscheint.

Fig. 1 zeigt eine mittels eines Meßgeräts und eines übergeordneten elektronischen Datenverabeitungssystem gebildete Meßanordnung, und

Fig. 2 zeigt nach Art eines Blockschaltbildes eine für die Verwendung in einem Meßgerät gemäß Fig. 1 geeignete Meßgerät-Elektronik:

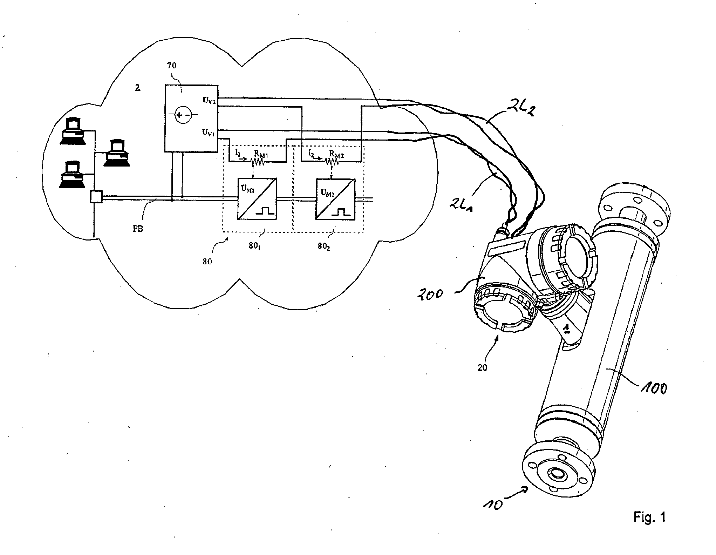

In den Fig. 1 ist ein Ausführungsbeispiel einer für die Verwendung in der industriellen Meß- und Automatisierungstechnik geeigneten Meßanordnung gezeigt, die dafür vorgesehen ist, chemische und/oder physikalische Meßgrößen, insb. von strömungsfähigen und/oder schüttfähigen Medien, zu erfassen. Die Meßanordnung weist dafür wenigstens ein Meßgerät 1, das mittels einer internen Meßgerät-Elektronik 20 im Betrieb wiederholt die wenigstens eine zu erfassende Meßgröße repräsentierende Meßwerte generiert, sowie ein dem wenigstens einen Meßgerät 1 übergeordenetes elektronisches Datenverarbeitungssystem 2 auf. Das übergeordnete Datenverarbeitungssystem 1 kann beispielsweise Teil einer prozeßnahen automatisierten Steuerung oder eines weitreichenden Prozeßleitsystems sein, das eine Vielzahl von Prozeßleitrechnern und/oder digitalen Speicherprogrammierbaren Steuerungen aufweist, die innerhalb einer industriellen Anlage räumlich verteilt angeordnet und über ein entsprechendes, insb. auch mittels digitaler Feldbusse gebildetes, Datenübertragungsnetzwerk miteinander gekoppelt sind. Gleichermaßen kann das Datenverarbeitungssystem mit weiteren Meßgeräten und/oder mit in den Prozeß eingreifenden Stellgeräten, wie z.B. Ventilen oder Pumpen, verbunden sein. Gemäß einer Ausgestaltung der Erfindung dient das Meßgerät 1 vornehmlich dazu, einen Massendurchfluß m, eine Dichte r, eine Viskosität h, einen Volumendurchfluß, eine Strömungsgeschwindigkeit, einen Druck p, eine Temperatur *J*, einen pH-Wert, einen Pegelstand oder dergleichen, eines in einer Rohrleitung und/oder einem Behälter geführten Mediums, insb. eines Gases und/oder einer Flüssigkeit, zu messen und/oder zu überwachen sowie wiederholt diese Meßgröße entsprechend repräsentierende Meßwerte zu liefern.

Das Meßgerät 1 und das von diesem gegebenenfalls räumlich beträchtlich entfernte Datenverarbeitungssystem 2 sind mittels wenigstens eines im Betrieb zumindest zeitweise von einem ersten Strom durchflossen ersten Leitungspaares 2L₁ und mittels wenigstens eines im Betrieb zumindest zeitweise von einem zweiten Strom durchflossen zweiten Leitungspaares 2L₂ miteinander verbunden.

Die erfindungsgemäße Meßanordnung ist ferner so ausgebildet, daß das Meßgerät die intern generierten Meßwerte - seien es nun Meßwerte von diversen erfaßten Meßgrößen, wie z.B. einem Massendurchfluß und einer Dichte eines in einer Rohrleitung strömenden Mediums, oder redundant zu übertragende Meßwerte ein und derselben Meßgröße - zumindest teilweise über das erste Leitungspaar 2L₁ und zumindest teilweise über das zweite Leitungspaar 2L₂ an das übergeordnete Datenverarbeitungssystem 2 übermittelt. Zum Erfassen von vom Meßgerät übermittelten Meßwerten ist im Datenverarbeitungssystem ferner wenigstens eine zumindest zeitweise mit wenigstens einem der Leitungspaare 2L₁, 2L₂ kommunizierende Auswerte-Schaltung 80 vorgesehen. Gemäß einer Ausgestaltung der Erfindung umfaßt das Datenverarbeitungssystem weiters wenigstens einen dem Übertragen digitaler Meßwerte dienenden, insb. seriellen, Feldbus FB. Bei dem wenigstens einen Feldbus FB kann es sich beispielsweise um einen solchen gemäß einem der in der industriellen Prozeßautomation etablierten Standards, wie z.B. FOUNDATION FIELDBUS, PROFIBUS oder RACKBUS-RS 485, handeln. In einer vorteilhaften Weiterbildung ist dabei ferner vorgesehen, daß die vorgenannte Auswerte-Schaltung, insb. zur Weiterleitung der vom Meßgerät empfangenen Meßwerte, an den wenigstens einen Feldbus gekoppelt ist.

Damit eine Meßanordnung der vorbeschriebenen Art realisiert und betrieben werden kann, ist die Meßgerät-Elektronik 20 und insoweit das Meßgerät 1 als solches mittels wenigstens eines ersten Klemmenpaars für das des erste Leitungspaar 2L₁ und mittels wenigstens eines zweiten Klemmenpaars für das zweiten Leitungspaar 2L₂ versehen, das es jeweils an das zugehörige Leitungspaar und insoweit an das übergeordenetes elektronisches Datenverarbeitungssystem 2 entsprechend anschließbar ist. Zudem ist die Meßgerät-Elektronik 20 dafür ausgelegt, im Betrieb eine Vielzahl von zumindest anteilig die wenigstens eine Meßgröße repräsentierenden, insb. digitalen, Meßwerten zu generieren, und diese zumindest teilweise via erstes Klemmen- und daran enstprechend angeschlossenes Leitungspaar 2L₁ und zumindest teilweise via zweites Klemmen- und daran enstprechend angeschlossenes Leitungspaar 2L₁ an das angeschlossene Datenverarbeitungssystem 2 zu übermitteln. Falls erforderlich, kann die erfindungsgemäße Meßanordnung ferner dahingehend weitergebildet sein, daß Meßgerät 1 und Datenverarbeitungssystem 2 auch mittels wenigstens eines zusätzlichen - hier nicht gezeigten - dritten Leitungspaares miteinander verbunden sind, das im Betrieb zumindest zeitweise von einem dritten Strom durchflossen ist. Für diesen Falls kann das Meßgerät ferner die intern-generierten Meßwerte zumindest teilweise auch über das zusätzliche dritte Leitungspaar an das Datenverarbeitungssystem übermitteln.

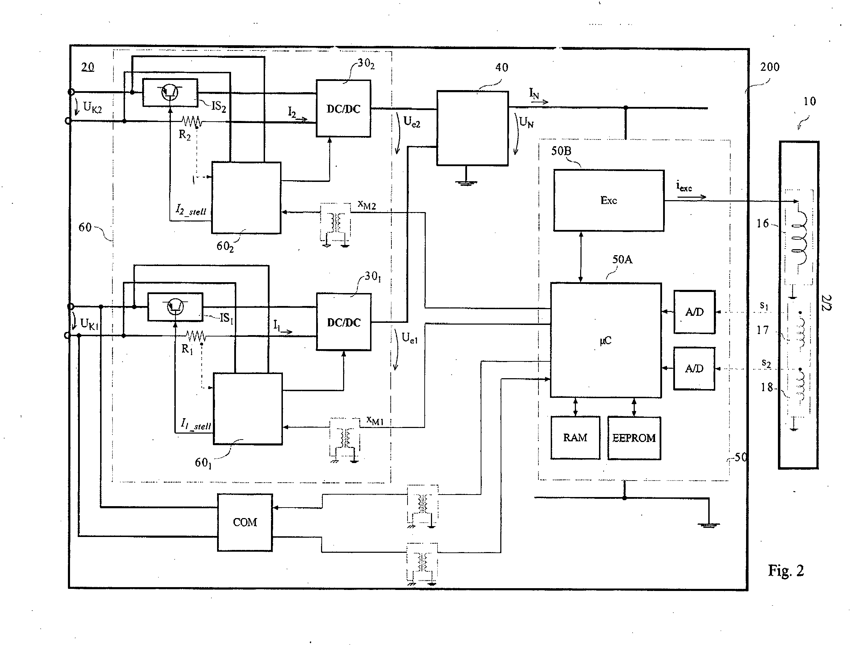

Zum Erzeugen der Meßwerte ist das Meßgerät 1 ferner mit einen auf Änderungen wenigstens einer physikalischen oder chemischen Meßgröße reagierenden Meßaufnehmer 10, der wenigstens ein von der wenigstens einen Meßgröße beeinflußtes und insoweit mit dieser korrespondierendes Meßsignal s₁ beispielsweise eine veränderliche Signalspannung und/oder einen veränderlichen Signalstrom liefert, sowie eine an den Meßaufnehmer 10 angeschlossene, das wenigstens eine Meßsignal empfangende Meßgerät-Elektronik ausgerüstet, von der der Fig. 2 ein Beispiel für entsprechender Meßgerät-Elektronik 20 schematisch dargestellt ist. Ferner ist vorgesehen, daß die Meßgerät-Elektronik 20 des Meßgeräts 1, die Meßwerte zumindest teilweise unter Verwendung des wenigstens einen Meßsignals s₁ erzeugt. Das Meßgerät 1 weist gemäß einer vorteilhaften Ausgestaltung ferner ein den Meßaufnehmer 10 zumindest teilweise einhausendes Meßaufnehmer-Gehäuse 100. Desweiteren umfaßt das Meßgerät 1 ein Elektronik-Gehäuse 200, in dem die mit dem Meßaufnehmer 10 in geeigneter Weise elektrisch verbundene Meßgerät-Elektronik 20 untergebracht ist. Gemäß einer weiteren vorteilhaften Ausgetsaltung der Erfindung sind das Meßaufnehmer-Gehäuse 100 mit dem darin befindlichen Meßaufnehmer und das Elektronik-Gehäuse 200 mit der darin befindlichen Meßgerät-Elektronik unter Bildung eines Kompakt-Meßgeräts mechanisch, insb. im wesentlichen starr, miteinander verbunden. Damit eine Meßanordnung der vorbeschriebenen Art realisiert und betrieben werden kann, ist Meßgerät-Elektronik mittels wenigstens eines ersten Klemmenpaars für das des erste Leitungspaar 2L₁ und mittels wenigstens eines zweiten Klemmenpaars für das zweiten Leitungspaar 2L₂ versehen, das es jeweils an das zugehörige Leitungspaar und insoweit an das übergeordenetes elektronisches Datenverarbeitungssystem entsprechend anschließbar ist. Zudem ist die die Meßgerät-Elektronik dafür ausgelegt, im Betrieb eine Vielzahl von zumindest anteilig die wenigstens eine Meßgröße repräsentierenden, insb. digitalen, Meßwerten zu generieren, und diese zumindest teilweise via erstes Klemmen- und daran enstprechend angeschlossenes Leitungspaar 2L₁ und zumindest teilweise via zweites Klemmen- und daran enstprechend angeschlossenes Leitungspaar 2L₁ an das angeschlossene Datenverarbeitungssystem zu übermitteln. Jedes der - hier mindestens zwei - Paare elektrischer Leitungen 2L₁, 2L₂ für sich genommen kann dabei beispielsweise jeweils als Teil einer sogenannte, in der industriellen Meßtechnik bewährte Zweileiter-Stromschleife ausgebildet sein.

Bei dem im in Fig. 1 exemplarisch gezeigten Meßgerät handelt es sich um ein In-Line-Meßgerät, das im besonderen dazu dient, Meßgrößen, z.B. einen Massedurchfluß, eine Dichte und/oder eine Viskosität, eines in einer - hier nicht dargestellte - Rohrleitung strömenden Mediums, insb. eines Gases und/oder einer Flüssigkeit, zu erfassen und in einen diese Meßgrößen momentan repräsentierenden Meßwerte X_{M1}, X_{M2} abzubilden. Demgemäß kann das Meßgerät beispielsweise ein Coriolis-Massedurchflußmeßgerät, ein Dichte-Meßgerät, oder auch ein Viskositäts-Meßgerät sein. Zum Erzeugen des wenigstens einen Meßsignals umfaßt das gezeigten Meßgerät ferner einen innerhalb des - hier im wesentlichen rohrförmig ausgebildeten - Meßaufnehmer-Gehäuses 100 untergebrachten, in den Verlauf der das Medium führenden Rohrleitung einsetzbaren und im Betrieb vom Medium durchströmten Meßaufnehmer 10 vom Vibrationstyp. Aufbau und Wirkungsweise solcher Meßaufnehmer 10 vom Vibrationstyp sind dem Fachmann ebenfalls geläufig und beispielsweise auch in den eingangs erwähnten WO-A 02/103327, WO-A 02/086426, WO-A 88/02476, WO-A 00/36379, US-B 71 34 348, US-B 70 73 396, US-B 67 69 301, US-B 67 11 958, US-B 66 91 583, US-B 66 66 098, US-A 60 06 609, US-A 57 96 011, US-A 56 87 100, US-A 56 02 345, US-A 53 59 881, US-A 53 01 557, US-A 52 31 884, US-A 47 68, US-A 2006/0179956, US-A 2006/0161359, US-A 2006/0112774, US-A 2006/0096390 oder US-A 2005/0139015 ausführlich beschrieben ist. Es sei jedoch an dieser Stelle darauf hingewiesen, daß, obwohl es sich bei dem im Ausführungsbeispiel vorgestellten Meßgerät um ein In-Line-Meßgerät mit einem Meßaufnehmer vom Vibrationstyp handelt, die Erfindung selbstverständlich auch in In-Line-Meßgeräten mit einem anderen Meßaufnehmertyp, beispielsweise solchen In-Line-Meßgeräten mit magnetisch-induktivem Meßaufnehmer oder mit akustischem Meßaufnehmer, umgesetzt werden kann. Gleichermaßen kann die vorliegende Erfindung aber beispielsweise auch in andern Feldgerätetypen Verwendung finden, beispielsweise in solchen Meßgeräten, die dem Messen von Meßgrößen dienen, wie sie im Zusammenhang mit Medien vorhaltenden Behältern ermittelt werden, z.B. zum Messen und/oder Überwachen von Pegelständen. Derartige Meßgeräte sind üblicherweise mittels solcher Meßaufnehmer realisiert, die wenigstens eine in ein Lumen des Behälters hineinragende oder zumindest mit dem Lumen kommunizierende Meßsonde, beispielsweise eine Mikrowellenantenne, eine Gouboun-Leitung, einen vibrierenden Tauchkörper oder dergleichen, aufweisen.

Gemäß einer weiteren Ausgestaltung der Erfindung ist der Meßaufnehmer so ausgebildet, daß er auf Änderungen einer zu erfassenden Meßgröße X ₁ erster Art, beispielsweise einem Massendurchfluß m eines in einer Rohrleitung strömenden Mediums, und wenigstens einer dazu diversitären zu erfassenden Meßgröße X₂ zweiter Art reagiert, beispielsweise einer Dichte *r* oder einer Viskosität h selbigen Mediums. Dementsprechend ist der Meßaufnehmer ferner so ausgebildet, daß das wenigstens eine vom Meßaufnehmer gelieferte Meßsignal s₁ auch die Meßgröße zweiter Art repräsentiert. Alternativ oder in Ergänzung dazu kann der Meßaufnehmer auch so ausgebildet sein, daß er wenigstens ein erstes Meßsignal s₁ und ein zweites Meßsignal s₂ liefert. Damit einhergehend kann die Meßgerät-Elektronik die Meßwerte zumindest teilweise unter Verwendung des ersten und des zweiten Meßsignals s₁, s₂ erzeugen.

In Fig. 2 ist schematisch nach Art eines Blockschaltbildes eine Ausgestaltung einer für das In-Line-Meßgerät nach Fig. 1 geeigneten Meßgerät-Elektronik 20 dargestellt. Rechts In Fig. 2 ist der Meßaufnehmer angedeutet - hier inform des bereits erwähnten Meßaufnehmers vom Vibrationstyp mit wenigstens einem Meßrohr, einer darauf einwirkenden, insb. elektrodynamischen, Erregeranordnung 16 zum Vibrierenlassen des Meßrohrs und mit einer, insb. elektrodynamischen, Sensoranordnung 17, 18 zum Erfassen von Vibrationen des wenigstens einen Meßrohrs und zum Erzeugen des wenigstens einen - hier Vibrationen des wenigstens einen Meßrohrs repräsentierenden - Meßsignals s₁. Zum Erzeugen der Meßwerte ist in der Meßgerät-Elektronik eine Betriebs- und Auswerteschaltung 50 vorgesehen, die den Meßaufnehmer über dessen Errgeranordnung 16 entsprechend ansteuert und die das wenigstens eine - hier mittels der Sensoranordnung generierte - Meßsignal s₁ empfängt. Das erste Meßsignal s₁ und das ggf. vorhandene zweite Meßsignal s₂, von denen jedes üblicherweise eine der momentanen Schwingfrequenz des Meßrohrs 13 entsprechende Signalfrequenz aufweist, sind, wie in Fig. 2 gezeigt, einer der Meßgerät-Elektronik 20 vorgesehenen, vorzugsweise digitalen, Auswerteeinheit 50A der Betriebs- und Auswerteschaltung 50 zugeführt. Die Auswerteeinheit 50A dient dazu, einen die zu erfassende Meßgröße, hier z.B. den Massendurchfluß etc., momentan repräsentierenden Meßwert X_{M1} erster Art, insb. numerisch, zu ermitteln und in ein entsprechend korrespondierendes, ausgangs der der Betriebs- und Auswerteschaltung 50 abgreifbares Meßwertsignal x_{M1} umzuwandeln. Darüberhinaus dient die Auswerteeinheit 50A gemäß einer Ausgetsaltung der Erfindung auch dazu, zusätzlich zum Meßwerte X_{M1} erste Art wenigstens einen Meßwert X_{M2} zweiter Art, insb. numerisch, zu ermitteln, der eine weitere zu erfassende Meßgröße, hier z.B. die Dichte und/oder die Viskosität des Mediums, momentan repräsentiert. Gleichermaßen dient die die Auswerteeinheit 50A ferner dazu, auch den Meßwert X_{M2} zweiter Art in ein entsprechend korrespondierendes, ausgangs der der Betriebs- und Auswerteschaltung 50 abgreifbares Meßwertsignal x_{M2} umzuwandeln. Während beim hier gezeigten Meßaufnehmer die Dichte oder auch Viskosität durchaus anhand eines einzigen der Meßsignale s₁, s ₂ bestimmbar sind, werden für den Fall, daß der Massedurchfluß gemessen werden soll, in der dem Fachmann bekannten Weise beide Meßsignale s₁, s₂ verwendet, um so, beispielsweise im Signal-Zeitbereich oder im Signal-Frequenzbreich, eine mit dem Massendurchfluß korrespondierende Phasendifferenz zu ermitteln.

Nach einer Ausgestaltung der Erfindung ist die Auswerteeinheit 50A unter Verwendung eines in der Meßgerät-Elektronik 20 vorgesehenen Mikrocomputers µC realisiert, der in entsprechender Weise so programmiert ist, daß er wiederkehrend den Meßwert X_{M1} erster Art und gegebenenfalls auch den Meßwert X_{M2} zweiter Art anhand der von der Sensoranordnung 17, 18 gelieferten Meßsignale digital ermittelt. Zur Realisierung des Mikrocomputers können z.B. geeignete Mikroprozessoren und/oder auch moderne Signalprozessoren verwendet werden. Wie in der Fig. 2 ferner dargestellt, umfaßt die Auswerteeinheit 50A ferner wenigstens einen A/D-Wandler, über den eines der Sensorsignale s₁, s₂ oder, wie im besonderen bei Coriolis-Massedurchflußaufnehmern üblich, eine zuvor von den beiden Sensorsignalen s₁, s₂ abgeleitete Signaldifferenz dem Mikroprozessor digitalisiert zugeführt ist. Die seitens der Auswerteeinheit 50A erzeugten und/oder empfangenen Meß- oder Betriebsdaten können ferner in entsprechenden digitalen Datenspeichern RAM, EEPROM flüchtig und/oder persistent abgespeichert werden.

Wie bereits erwähnt, enthält die Betriebs- und Auswerteschaltung 50 ferner eine der Speisung der Erregeranordnung 16 mit dem erwähnten Erregerstrom i_{exc} dienende Treibereinheit 50B, die zusammen mit dem Meßrohr 13 praktisch einen Regelkreis darstellt. Dieser Regelkreis ist so ausgelegt, daß er sich elektrisch sowohl auf die mechanische Resonanzfrequenz der angeregten Vibrationen des Meßrohrs 13 als auch auf die mittels des Referenzsignals Sr vorgegebene Amplitude dieser Vibrationen einstellt. Die Treibereinheit 50B kann dabei in der üblichen Weise mittels einer phasenverriegelte Schleife, eine so genannte PLL, zur elektrischen Regelung der Resonanzfrequenz wie auch der Phasenlage des Treibersignals und mittels einer entsprechenden Amplitudenregelstufe zur elektrischen Regelung der Amplitude des Treibersignals und insoweit auch der Vibrationsamplitude gebildet sein. Wie in Fig. 1 dargestellt steht die Treibereinheit 50B auch in Kontakt mit der Auswerteeinheit 50A, insb. dem bereits erwähnten Mikroprozessor µC, von der die Treibereinheit 50B z.B. die erforderlichen Betriebsdaten, wie z.B. die momentan einzustellende Erregerfrequenz und/oder die eine für den Erregerstrom momentan einzustellende Amplitude und ggf. einzustellende Phase, empfängt oder an den die Treibereinheit 50B intern erzeugte Einstellsignale und/oder -parameter, insb. auch Informationen über den eingestellten Erregerstrom i_{exc} und/oder die in den Meßaufnehmer eingespeiste Erregerleistung P_{exc} sendet. Die Betriebsdaten für die Treibereinheit 50B, Erregerfrequenz, Amplitude und/oder Phase, können dabei sowohl absolute Vorgaben als auch relative Vorgaben sein. Alternativ oder in Ergänzung dazu können die an die Treibereinheit 50B übergebenen Betriebsdaten auch inkrementelle bzw. dekrementelle Änderungen von Erregerfrequenz, Amplitude und/oder Phase repräsentieren. Zusätzlich zum Mikroprozessor µC kann die Betriebs- und Auswerteschaltung 50 beispielsweise auch einen dem Erzeugen des Treibersignals dienenden Signalgenerator, beispielsweise einen digitalen Signalprozessor oder ein entsprechend als Signalgenerator konfiguriertes programmierbares logisches Bauelement aufweisen.

Die Meßgerät-Elektronik und insoweit das Meßgerät als solches ist des weiteren von einer im übergeordneten Datenverarbeitungssystem vorgesehenen externen elektrischen Energieversorgung 70 gespeist. Als Energiequelle kann dabei z. B. eine Batterie oder einer über ein anlageninternes Versorgungsnetz gespeiste Gleich- oder Wechselspannungsquelle dienen. Im Betrieb stellt die Energieversorgung 70 wenigstens eine, insb. uni-polare, Versorgungsspannung U_{V1} bereit, die zumindest den im Leitungspaar 2L₁ fließenden veränderlichen Strom I₁ treibt. Dafür ist die Meßgerät-Elektronik im Betrieb mit der externen elektrischen Energieversorgung 70 über wenigstens das erste Paar elektrische Leitungen 2L₁ elektrisch verbunden. Infolge der zwischen externer Energieversorgung und Eingang der Meßgerät-Elektronik 20 naturgemäß auftretenden Spannungsfälle wird die Versorgungsspannung U_{V} auf diesem Wege allerdings noch zur eingangs der Meßgerät-Elektronik tatsächlich anliegenden Klemmenspannung U_{K1} reduziert. Gemäß einer weiteren Ausgestaltung der Erfindung ist gleichermaßen auch der im zweiten Paar 2L₂ elektrische Leitungen fließende Strom I₂ von einer seitens des Datenverarbeitungssystem entsprechend bereitgestellten Versorgungsspannung getrieben, die infolge von entsprechenden Spannungsabfällen über dem zweiten Leitungspaar 2L₂ entsprechend zur eingang der Meßgerät-Elektronik tatsächlich anliegenden Klemmenspannung U_{K2} verringert wird. Dabei können die vorgenannte Versorgungsspannung für den im Leitungspaar 2L₂ fließenden Strom I₂ sowie die Versorgungsspannung für den Strom I₁ im anderen Leitungspaar 2L₁ und damit einhergehend die davon jeweils unmittelbar abhängige Klemmenspannung U_{K1}, U_{K2} von einer gemeinsamen Spannungsquelle abgegriffen und somit voneinander direkt abhängig ausgebildet sein. Anders gesagt, können die Ströme I₁, I₂ in den beiden Leitungspaaren 2L₁, 2L₂ von praktisch ein und dieselbe Versorgungsspannung U_{V} getrieben sein. Es kann aber auch von Vorteil sein, im Datenverarbeitungssystem alternativ dazu zwei voneinander weitgehend unabhängige Spannungsquellen vorzuhalten, von denen eine erste eine erste Versorgungsspannung U_{V1} für das erste Leitungspaar 2L₁ bereitstellt, die zumindest zeitweise den durch das Leitungspaar 2L₁ fließenden ersten Strom I₁ treibt, und von denen eine zweite eine zweite Versorgungsspannung U_{V2} für das zweite Leitungspaar 2L₂ bereitstellt, die zumindest zeitweise den durch das Leitungspaar 2L₂ fließenden zweiten Strom I₂ treibt. Gemäß einer Ausgestaltung der Erfindung ist ferner vorgesehen, daß, wie auch in Fig. 1 dargestellt, die Meßgerät-Elektronik mit der externen elektrischen Energieversorgung zumindest zeitweise lediglich über genau zwei Leitungspaare 2L₁, 2L₂ elektrisch wirksam verbunden ist. Ferner ist bei dieser Ausgestaltung der Erfindung vorgesehen, daß dann einerseits die zumindest zeitweise erzeugten Meßwerte über diese beiden einzigen Leitungspaare 2L₁, 2L₂ an das übergeordnete Datenverarbeitungssystem gesendet werden und andererseits die Meßgerät-Elektronik und insoweit das Meßgerät zumindest zeitweise über jedes der beiden Leitungspaare 2L₁, 2L₂ mit elektrischer Energie versorgt wird.

Gemäß einer Ausgestaltung der Erfindung werden die seitens des Meßgeräts im Betrieb intern generierten Meßwerte X_{M1} erster Art dadurch an das Datenverarbeitungssystem übermittelt, das seitens des Meßgeräts eine Stromstärke des zumindest zeitweise durch das erste Leitungspaar 2L₁ fließenden Stromes I₁ eingestellt wird. Im besonderen ist hierbei vorgesehen, daß das Meßgerät zum Übermitteln der Meßwerte den im ersten Leitungspaar 2L₁ fließenden Strom I₁ innerhalb eines vorgegebenen Stromstärke-Bereichs variiert, beispielweise innerhalb eines Stromstärke-Bereichs zwischen 4 mA und 20 mA. Alternativ oder in Ergänzung kann das Meßgerät intern generierte Meßwerte auch dadurch an das Datenverarbeitungssystem übermitteln, daß es den im ersten Leitungspaar 2L₁ fließenden Strom I₁ taktet, beispielsweise indem der Strom I₁ als ein rechteckmodulierter Strom ausgebildete ist. Beispielsweise können hierbei eine Taktfrequenz und/oder eine Pulsweite des im ersten Leitungspaar 2L₁, fließenden Strom I₁ variiert werden, insb. so daß im Ergebnis der getaktete Strom I₁ gemäß einem digitalen Übertragungsprotokoll moduliert ist. Wie aus der der Fig. 2 ersichtlich, weist die Meßgerät-Elektronik 20 für die Einstellung und Reglung des im ersten Leitungspaars 2L₁ fließdenden Stromes I₁ ferner wenigstens einen davon durchflossenen Stromsteller IS₁ zum Einstellen oder Modulieren, insb. Takten, des Stroms I₁ auf.

Zum Erfassen und Regulieren des momentan im ersten Leitungspaar 2L₁ fließenden Stromes I₁ weist die Meßgerät-Elektronik 20 ferner eine entsprechende, beispielsweise mittels der Klemmenspannung U_{K1} gespeiste, erste Meß- und Regelstufe 60₁ auf. Im besonderen dient die Meß- und Regelstufe 60₁, insb. für den oben erwähnten Fall, daß zumindest der Strom I₁ als Signalträger für Meßwerte dient, auch dazu, das von der Betriebs- und Auswerteschaltung 50 gelieferte, den momentan zu übertragenden Meßwert X_{M1} intern repräsentierendes Meßwertsignal x_{M1} in ein den Stromsteller IS₁ und insoweit auch den Strom I₁ entsprechend einstellendes erstes Stromstellsignal I_{1_stell} umzusetzen. Die Meß- und Regelstufe 60₁ bildet insoweit zusammen mit dem Stromsteller IS₁ praktisch einen Stromregler - hier einen sogenannten linearen Längsregler - für den Strom I₁ im zweiten Leitungspaar 2L₁. Das Stromstellsignal I_{1_stell} ist gemäß einer Ausgestaltung der Erfindung so ausgelegt, daß der vorgenannte Stromregler in die Lage versetzt ist, den Strom I₁ unter Berücksichtigung des momentan via zweites Leitungspaar 2L₁ zu übertragenden Meßwerts X_{M1} proportional zu diesem einzustellen. Alternativ oder in Ergänzung dazu ist das Stromstellsignal I_{1_stell} aber auch so ausgebildet sein, das der Stromregler den Strom I₁ taktet, beispielsweise zum Zwecke der Kommunikation binär-codiert gemäß dem Standard PROFIBUS-PA.

Nach einer Weiterbildung der Erfindung ist ferner vorgesehen, daß das Meßgerät intern generierte Meßwerte an das Datenverarbeitungssystem teilweise dadurch übermittelt, beispielsweise jene Meßwerte zweiter Art X _{M2}, daß es eine Stromstärke des zumindest zeitweise durch das zweite Leitungspaar 2L₂ fließenden Stromes I₂ einstellt. Im besonderen ist auch hierbei vorgesehen, daß das Meßgerät zum Übermitteln der Meßwerte den im zweiten Leitungspaar fließenden Strom I₂ innerhalb eines vorgegebenen Stromstärke-Bereichs variiert, beispielweise wiederum innerhalb eines Stromstärke-Bereichs zwischen 4 mA und 20 mA. Alternativ oder in Ergänzung kann das Meßgerät intern generierte Meßwerte aber auch dadurch an das Datenverarbeitungssystem übermitteln, daß es den im zweiten Leitungspaar 2L₂ fließenden Strom taktet. Beispielsweise können auch hierfür eine Taktfrequenz und/oder eine Pulsweite des im zweiten Leitungspaar 2L₂ fließenden Strom I₂ variiert werden. Nach einer Weiterbildung der Erfindung weist die Meßgerät-Elektronik 20 dementsprechend für die Einstellung und Reglung des im zweiten Leitungspaars 2L₂ fließdenden Stromes I₂ ferner wenigstens einen davon durchflossenen zweiten Stromsteller IS₂ zum Einstellen oder Modulieren, insb. Takten, des Stroms I₂ auf. Zum Erfassen und Regulieren des momentan im zweiten Leitungspaar 2L₂ fließenden Stromes I₂ weist die Meßgerät-Elektronik 20 zumindest für diese Weiterbildung der Erfindung ferner eine entsprechende, beispielsweise mittels der Klemmenspannung U_{K2} gespeiste, erste Meß- und Regelstufe 60₂. Im besonderen dient die Meß- und Regelstufe 60₂, insb. für den oben erwähnten Fall, daß der Strom I₂ als Signalträger für Meßwerte dient, auch dazu, das von der Betriebs- und Auswerteschaltung 50 gelieferte, den momentan via zweites Leitungspaar 2L₂ zu übertragenden Meßwert X_{M2} intern repräsentierendes Meßwertsignal x_{M2} in ein den Stromsteller IS₂ und insoweit auch den Strom I₂ entsprechend einstellendes erstes Stromstellsignal I_{2_stell} zu konvertieren. Die Meß- und Regelstufe 60₂ bildet insoweit zusammen mit dem Stromsteller IS₂ einen Stromregler - hier wieder einen sogenannten linearen Längsregler - für den Strom I₂ im zweiten Leitungspaar 2L₂. Das Stromstellsignal I_{2_stell} ist gemäß einer Ausgestaltung dieser Weiterbildung der Erfindung so ausgelegt, daß der vorgenannte Stromregler in die Lage versetzt ist, den Strom I₂ unter Berücksichtigung des momentan zu übertragenden Meßwerts X_{M2} proportional zu diesem einzustellen. Alternativ oder in Ergänzung dazu ist das Stromstellsignal I_{2_stell} so ausgebildet, das der Stromregler den Strom I ₂ taktet, beispielsweise zum Zwecke der Kommunikation wiederum binär-codiert.

Zum Erzeugen von entsprechend stromrepräsentativen, insb. im wesentlichen stromproportionalen, Sensespannungen I_{1_ist}, I_{2_ist} sind des weiteren in der Meßgerät-Elektronik 20 entsprechende, vom jeweiligen Strom I₁, I₂ oder davon abgezeigten Teilströmen entsprechend durchflossene Sensewiderstände R₁, R₂, vorgesehen. Diese können gegebenenfalls zusätzlich auch der Strombegrenzung dienen.

Für den vorbeschriebenen Fall, daß wenigstens über wenigstens ein Leitungspaar Meßwert durch Varieren des darin fließenden Stroms I₁ zwischen 4 mA und 20 mA an das übergeordnete Datenverarbeitungssystem übertragen werden, ist gemäß einer Weiterbildung der Erfindung ferner vorgesehen und wie z.B. auch in der eingangs erwähnten US-B 66 84 340 vorgeschlagen, mittels einer zeitweise eingestellten Stromstärke von mehr als 20 mA, beispielsweise von etwa 22 mA, und/oder mittels zeitweise eingestellten Stromstärke von weniger als 4 mA, beispielsweise von etwa 3,6 mA oder auch 0 mA, kritische Zustände innerhalb des Meßgeräts oder innerhalb des mittels des Meßgeräts überwachten Prozesses an das übergeordnete Datenverarbeitungssystem zu signalisieren.

Nach einer anderen Ausgestaltung der Erfindung ist vorgesehen, daß das Meßgerät zumindest zeitweise mit einer externen Steuer- und Kontroll-Einheit, beispielsweise einem Handbediengerät oder einer im übergordeneten Datenverarbeitungssystem vorgesehenen speicherprogrammierbaren Steuerung (SPS), gerätespezifische Daten, wie z.B. meßgerätinterne Einstell-Parameter für die Megerät-Elektronik und/oder meßgerätinterne Diagnose-Parameter, austauscht. Dafür ist in der Meßgerät-Elektronik 20 ferner wenigstens eine Kommunikationsschaltung COM vorgesehen, die die Kommunikation über wenigstens eines der Leitungspaare - hier das erste Leitungspaar 2L₁ - entsprechend kontrolliert und steuert. Im besonderen dient die Kommunikationsschaltung dazu die zu senden gerätespezifische Daten in Signale umzuwandeln, die über das entsprechend Paar elektrische Leitungen übertragbar sind, und diese dann darin einzukoppeln. Alternativ oder in Ergänzung dazu kann die Kommunikationsschaltung COM aber auch dafür ausgelegt sein, von extern über das jeweilig Paar elektrische Leitungen gesendete gerätespezifische Daten, beispielsweise einen Satz von zu änderenden Einstell-Parameter für die Megerät-Elektronik, entsprechend zu empfangen. Als Kommunikationsschaltung COM kann, z. B. eine gemäß dem HART@-Feld-Kommunikations-Protokoll der HART Communication Foundation, Austin TX arbeitende Schnittstellenschaltung dienen, die also höher frequente, FSK-codierte (frequency shift keying) Wechselspannungen als Signalträger verwendet.

Gemäß einer weiteren Ausgestaltung der Erfindung ist die Meßgerät ferner so ausgebildet, daß wenigstens der im ersten Leitungspaar 2L₁ fließende erste Strom I₁ - zumindest anteilig oder auch gänzlich -, insb. zusätzlich zur Übertragung von Meßwerten, auch der Versorgung des Meßgeräts mit elektrischer Energie dient. Demgemäß ist ferner vorgesehen, daß das Meßgerät seinen momentanen Energiebedarf zumindest anteilig mittels des ersten Stroms I₁ deckt. In einer Weiterbildung der Erfindung ist ferner vorgesehen, daß jeder der beiden gegebenefalls Meßwerte übertragenden Ströme zumindest zeitweise und/oder zumindest anteilig der Versorgung des Meßgeräts mit elektrischer Energie dient. Damit einhergehend deckt das Meßgerät im weiteren seinen momentanen Energiebedarf zumindest anteilig mittels des ersten Stroms und zumindest anteilig mittels des zweiten Stroms. In einer weiteren Ausgestaltung der Erfindung ist hierbei ferner vorgesehen, daß das Meßgerät seinen momentanen Energiebedarf vollständig mittels des ersten und zweiten Stroms deckt. Wenn also das Meßgerät auf jedem der wenigstens zwei Leitungspaar 2L₁, 2L₂ nach dem oben erwähnten, in der industriellen Meßtechnik seit langem eingeführten Standard von 4 mA bis 20 mA arbeitet, steht für die Energieversorgung im Normalbetrieb somit zwar lediglich der Strombereich unterhalb von 4 mA, je nach Höhe der Versorgungsspannung somit aber immerhin etwa 80 bis 180 mW (= Milliwatt) an elektrischer Leistung permanent zur Verfügung.

Nach einer weiteren Ausgestaltung der Erfindung ist die Meßgerät-Elektronik insgesamt ferner so ausgelegt und bemessen, daß eine maximal umgesetzte elektrische Leistung kleiner oder höchstens gleich 1 W ist. Beispielsweise kann die Meßgerät-Elektronik so ausgelegt und bemessen sein, daß das Feldgerät soweit eigensicher ist, daß es im Sinne eines Explosionsschutzes den, beispielsweise in den Europäischen Normen EN 50 014 und EN 50 020 aufgestellten, Anforderungen an eine intrinsische Explosionssicherheit (Ex-i) genügt. Alternativ oder in Ergänzumg dazu ist das erste Leitungspaar 2L₁ gemäß einer weiteren Ausgestaltung zur weiteren Verbesserung der Explosionssicherheit des Meßgeräts vom zweiten Leitungspaar 2L₂ zumindest innerhalb der Meßgerät-Elektronik galvanisch getrennt und/oder räumlich separiert, insb. abgeschottet oder abgekapselt. Beispielsweise kann das Elektronik-Gehäuse 200 des Meßgeräts dafür entsprechende Kammern für einzelne, voneinander entsprechend zu trennenden Teilschaltungen oder Schaltungssegmente aufweisen.

Infolge der naturgemäß begrenzten elektrischen Leistung der externen Energieversorgung sinkt die davon gelieferte Versorgungsspannung U_{V} und damit einhergehend auch die Klemmenspannung U_{K1} bei einem steigenden Laststrom - hier also beispielsweise der Strom I₁ und/oder der der Strom I₂ - entsprechend ab oder umgekehrt steigt die Versorgungsspannung U_{V} bei sinkendem Laststrom wieder an. Somit ist zumindest für den vorbeschriebenen Fall, bei dem der Strom I₁ sowohl der Energieversorgung des Meßgeräts als auch zum Zwecke der Darstellung des Meßwerts X_{M1} in seiner Amplitude moduliert wird, die Versorgungsspannung U_{V} und insoweit auch die Klemmenspannung U_{K1} in ihrer Spannungshöhe in vorab nicht bestimmbarer Weise schwankend und insoweit als im Betrieb in erheblichem Maße veränderlich anzusehen.

Die Meßgerät-Elektronik 20 weist daher gemäß einer weiteren Ausgestaltung der Erfindung ferner eingangs einen primärseitig mit dem ersten Leitungspaar 2L₁ gekoppelten, insb. als Gleichspannungswandler ausgebildeten, ersten Spannungskonverter 30₁ auf. Als Spannungskonverter können herkömmliche DC/DC-Wandler dienen. Beispiele für solche, dem Fachmann an und für sich bekannte DC/DC-Wandler sind u.a. der US-B 70 75 801, der US-B 69 82 574, der US-B 67 14 428, der US-B 65 35 400 oder der US-B 64 66 462 entnehmbar. Der Spannungskonverter 30₁ ist - angesteuert von einer zugehörigen ersten Meß- und Regelstufe 60₁ - dafür vorgesehen, eine als Primär- oder Basisspannung für die weitere interne Energieversorgung dienenden, insb. uni-polare, Eingangsspannung Uₑ₁ der Meßgerät-Elektronik 20 auf einem vorgebbaren, gegebenefalls im Betrieb auch veränderlichen Spannungsniveau möglichst genau einzustellen und weitgehend zu stabilisieren. Zudem dient der im Zusammenspiel von Meß- und Regelstufe 60₁ und Spannungskonverter 30₁ gebildete Eingansspannungregler 30₁, 60₁ auch dazu, die Eingangsspannung Uₑ₁ zumindest für den ungestörten Normalbetrieb, bei dem u.a. die Klemmenspannungen U_{K1}, U_{K2} jeweils mindest gleich einem minimalen Spannungswert sind, auch möglichst konstant und gleich bleibend auf diesem momentan gewählten Spannungsniveau zu halten. Dies kann beispielsweise durch eine entsprechend angepaßte Taktung des Spannungskonverters 30₁ erreicht werden. Alternativ zu einem quasi konstanten Spannungsniveau für die Eingangsspannung Uₑ₁ ist hierbei aber auch möglich, das Eingangsspannung Uₑ₁ z.B. stufenweise zu ändern, beispielsweise bei Über- oder Unterschreiten entsprechend vorgegebener Schwellenwerte für zumindest einen Ströme I₁, I₂ und/oder zumindest einer der Klemmenspannung U_{K1},U_{K2}, und somit das Spannungsniveau für die Eingangsspannung Uₑ₁ lediglich über einen gewissen Stromstärkebereich der Ströme I₁, I₂ und insoweit auch über einen entsprechenden Spannungsbereich der Klemmenspannung U_{K1},U_{K2} konstant zu halten. Falls erforderlich, kann das Spannungsniveau, auf dem die interne Eingangsspannung Uₑ₁ im Betrieb in Abhängigkeit vom momentan fließenden Strom I₁, beispielsweise unter Verzicht einer entsprechend wirkenden Spannungsregelung aber auch im wesentlichen kontinuierlich veränderlich gehalten sein.

Nach einer weiteren Ausgestaltung der Erfindung ist der vorgenannte Eingangsspannungsregler 30₁, 60₁ so ausgelegt, daß das Spannungsniveau für die Eingangsspannung Uₑ₁ nach dem Erreichen einer vorgegebenen oder vorgebbaren maximalen Spannungshöhe U_{ei_max} , beispielsweise in der Größenordnung von 15 V, trotz allfällig weiter ansteigender Klemmenspannung U_{K1}, beispielsweise auf über 20 V, konstant gehalten ist. Insoweit wirkt also dieser Eingangsspannungsregler 30₁, 60₁ nicht nur als ein Spannungsstabilisator für die interne Eingangsspannung Uₑ₁ sondern dient dann auch der Spannungsbegrenzung dafür.

Alternativ oder in Ergänzung zur Stabilisierung der Eingangsspannung Uₑ₁ kann der Spannungskonverter 30₁ auch der galvanischen Trennung nachfolgender Schaltungskomponenten der Meßgerät-Elektronik 20 von den dem Spannungskonverter 30₁ vorgelagerten Schaltungskomponenten der gesamten Meßanordnung, insb. des zugehörigen Leitungspaares 2L₁ sowie des darüber angeschlossenen übergeordneten Datenverarbeitungssystems, dienen. Dies kann z.B. durch Verwendung eines Übertragers im betriebsgemäß Wechselstrom führenden Zwischenstromkreis des Spannungskonverter 30₁ auf sehr einfache Weise realsiert werden.

Gemäß einer weiteren Ausgestaltung der Erfindung ist ferner eingangs ein mit dem zweiten Leitungspaar 2L₂ primärseitig gekoppelter, insb. als Gleichspannungswandler ausgebildeter, zweiter Spannungskonverter 30₂ vorgesehen, der - angesteuert von einer zugeordneten zweiten Meß- und Regelstufe 60₂ - dafür vorgesehen ist, eine als eine zweite Primär- oder Basisspannung für die weitere interne Energieversorgung dienenden, insb. uni-polare, Eingangsspannung Uₑ₂ der Meßgerät-Elektronik 20 ebenfalls auf einem vorgebbaren, gegebenfalls im Betrieb auch veränderlichen Spannungsniveau möglichst genau einzustellen sowie zumindest für den ungestörten Normalbetrieb, bei dem u.a. die Klemmenspannungen U_{K1}, U _{K2} jeweils mindest gleich einem minimalen Spannungswert sind, auch möglichst konstant und gleich bleibend auf diesem momentan gewählten Spannungsniveau zu halten, beispielsweise wiederum durch eine angepaßte Taktung. Alternativ oder in Ergänzung dazu kann der Spannungskonverter 30₂ gleichermaßen wie der erste Spannungskonverter 30₁ auch der galvanischen Trennung nachfolgender Schaltungskomponenten der Meßgerät-Elektronik 20 von den dem Spannungskonverter 30₂ vorgelagerten Schaltungskomponenten der gesamten Meßanordnung, insb. auch des zugehörigen Leitungspaares 2L ₂ sowie des darüber angeschlossenen übergeordneten Datenverarbeitungssystems dienen.

Nach einer Ausgestaltung dieser Weiterbildung der Erfindung ist ferner vorgesehen, daß die beiden Spanungskonverter 30₁, 30₂ und/oder die beiden Meß- und Regelstufen 60₁, 60₂ im wesentlichen baugleich ausgebildet sind. Nach einer weiter Ausgestaltung dieser Weiterbildung der Erfindung sind die beiden beiden Spanungskonverter 30₁, 30₂ sekundärseitig miteinander elektrisch gekoppelt, insb. galvanisch verbunden.

Zur weiteren internen Unterverteilung der elektrischen Energie an einzelnen Komponenten oder Baugruppen der Meßgerät-Elektronik 20 weist diese gemäß einer Weiterbildung der Erfindung in der Meßgerät-Elektronik 20 eine interne Versorgungsschaltung 40 auf, die an der zumindest anteilig von der Klemmenspannung U_{K1} abgeteilten internen ersten Eingangsspannung Uₑ₁ und, wie hier gezeigt, gegebenenfalls auch an der zweiten Eingangsspannung Uₑ₂ anliegt. Die Versorgungsschaltung 40 setzt die stabilisierte interne Eingangsspannungen Uₑ₁, gegebenenfalls auch die Eingangsspannungen Uₑ₁ oder auch eine aus den beiden Eingangsspannungen Uₑ₁, Uₑ₂ zusammengesetzte Spannung Uₑ₁+Uₑ₂ entsprechend um und stellt, wie in der Fig. 2 schematisch dargestellt, im Betrieb zumindest eine interne Nutzspannung U_{N} bereit, die einen internen, durch die interne Betriebs- und Auswerteschaltung 50 fließenden Nutzstrom I_{N} treibt und somit die interne Betriebs- und Auswerteschaltung 50 elektrisch speist. Gemäß einer Ausgestaltung dieser Weiterbildung der Erfindung liefert die Versorgungsschaltung 40 die wenigstens eine Nutzspannung U_{N} als auf einem vorgebbaren, gegebenfalls auch bei Inbetriebnahme und/oder im Betrieb parametrierbaren, Spannungsniveau *U_{N_soll}* im wesentlichen konstant geregelt. Zur Regelung der Nutzspannung U_{N} können in der Versorgungsschaltung 40 beispielsweise so genannte Schaltregler und/oder ungetaktete Linearregler verwendet werden. Ferner können zum Ausgleich allfälliger Schwankungen und/oder Unterschiede der der Versorgungsschaltung 40 primärseitig, gegebenenfalls auch ungeglättet angelegten Eingangsspannungen Uₑ₁, Uₑ₂ entsprechende Glättungskondensatoren und/oder- drosseln eingangs der Versorgungsschaltung 40 vorgsehen sein. Für den oben beschriebenen Fall, daß die Meßgerät-Elektronik 20 wenigstens zwei Spannungskonverter 30₁, 30₂ zum Bereitstellen entsprechender Eingangsspannungen Uₑ₁, Uₑ₂ aufweist, ist zur Vereinfachung der Reglung der internen Nutzspannung U_{N} nach einer weiteren Ausgestaltung der Erfindung vorgesehen, daß die beiden Spannungskonverter 30₁, 30₂ im Betrieb im wesentlichen gleichfrequent getaktet sind. Ferner kann es hierbei von Vorteil sein, die beiden Spannungskonverter 30₁, 30₂ im Betrieb relativ zueinander außerphasig, insb. gegenphasig, zu takten. Für den Fall, daß es bei den sekundärseitig jeweils bereitgestellten Eingangsspannungen Uₑ₁, Uₑ₂ um getaktete Gleichspannungen handelt, kann so auf sehr einfache Weise eine hohe Effektivität der nachfolgenden Spannungsreglung für die weiter interne Spannungsversorgung erreicht werden. Alternativ zur vorbeschriebenen weitgehend synchronsierten und/oder gleichfrequenten Taktung der wenigstens zwei Spannungskonverter 30₁, 30₂ kann es aber auch durchaus ausreichend sein, die beiden Spannungskonverter 30₁, 30₂ zumindest zeitweise zueinander asynchron oder mit voneinander verschiedenen Frequenzen zu takten.

Für den oben beschriebenen Fall, daß die Meßwerte zumindest anteilig durch eine entsprechend angepaßte Stromstärke der Ströme I₁, und/oder I ₂ an das übergeordnete Datenverarbeitungssystem gesendet werden, kann es gegebenenfalls erforderlich sein, die bei hohen Stromstärken allfälig überschüssige elektrische Leistung geeignet wieder abzuführen. Dies kann beispielsweise dadurch erreicht werden, daß in der Versorgungsschaltung 40 eine an der Nutzspannung U_{N} anliegende Z-Diodenschaltung und/oder ein entsprechender an der Nutzspannung U_{N} anliegender Shunt- oder Queregler vorgesehen ist, wobei Z-Diodenschaltung und/oder Queregler bei überschüssiger verfügbarer Leistung in der Meßgerät-Elektronik 20 von einem dementsprechenden Querstrom durchflossen sind und somit die überschüssige elektrische Leistung entsprechend in Wärme dissipieren. Alternativ oder in Ergänzung dazu kann der Abbau überschüssiger elektrischer Leistung bei entsprechender Dimensionierung auch mittels vorgenannter Spannungskonverter 30₁, 30₂ erfolgen, indem diese bei überschüssiger Leistung in einem Betriebsmodus mit vergleichsweise schlechtem Wirkungsgrad und bei geringer verfügbarer Leistung in einem Betriebsmodus mit einem möglichst hohen Wirkungsgrad betrieben werden.

Nach einer anderen Ausgestaltung der Erfindung sind in den Verlauf des ersten und/oder in den Verlauf des zweiten Leitungspaares, insb. eingangs der Meßgerät-Elektronik, Spannungsbegrenzer geschaltet, die eine eingangs der Meßgerät-Elektronik allfällige anliegende elektrische Überspannung auf einen zulässigen Maximalwert begrenzen. Die Spannungsbegrenzer können beispielsweise mittels eingangs der Meßgerät-Elektronik 20 und/oder in vorgenannten Spannungskonverter 301 und/oder im gegebenenfalls vorhanden Spannungskonverter 30₂ vorgesehenen Dioden gebildet sein. Alternative oder in Ergänzung zu den Spannungsbegrenzern sind in den Verlauf des ersten und/oder in den Verlauf des zweiten Leitungspaares, insb. eingangs der Meßgerät-Elektronik, Strombegrenzer geschaltet, die einen im jeweiligen Leitungspaar allfällig fließenden Kurzschlußstrom auf einen zulässigen Maximalwert begrenzen. Die Strombegrenzer können beispielsweise mittels in den Verlauf jeweils einer der Leitungen geschalteten Widerständen und/oder Sicherungen gebildet sein.

Nach einer weiteren Ausgestaltung der Erfindung ist ferner vorgesehen, daß die wenigstens zwei Leitungspaare 2L₁, 2L₂ zumindest innerhalb der Meßgerätelektronik voneinander galvanisch getrennt gehalten sind. Dafür weist die Meßgerät-Elektronik gemäß einer Weiterbildung der Erfindung wenigstens einen Übertrager auf. Dieser kann beispielsweise mittels zweier Primärspulen, von denen eine in der Verlauf des ersten Leitungspaares 2L₁ und eine andere in der Verlauf des zweiten Leitungspaares 2L₂ geschaltet sind, und mittels einer gemeinsamen, mit beiden Primärspulen magnetisch gekoppelten Sekundärspule auf einfache Weise gebildet sein. Der Übertrager kann dann beispielsweise - primärseitig um entsprechende Rechteck-Modulatoren und sekundärseitig um entsprechende Demodulatoren ergänzt - als Komponente eines an die wenigstens zwei Leitungspaare 2L₁, 2L₂ gleichermaßen angeschlossener, die entsprechende zugeführten Spannungen gemeinsam zu einer entsprechend zusammengesetzen Spannung wandlender Spannungskonverter dienen. Je nach Bedarf kann der wenigstens eine Übertrager zudem durch weitere, in den Verlauf einzelner intern der Meßgerät-Elektronik angelegter Strompfade eingesetzter Übertrager entsprechend ergänzt werden. Alternativ oder in Ergänzung dazu kann die Meßgerät-Elektronik einen oder auch mehrere in den Verlauf einzelner intern der Meßgerät-Elektronik angelegter Strompfade eingesetzte Optokoppler zur galvanischen Trennung der beiden Leitungspaare aufweisen. Darüberhinaus kann es des weiteren von Vorteil eingangsseitig Schaltungskomponenten der Meßgerät-Elektronik 20, beispielsweise die gegebenenfalls vorhandenen Stromsteller IS₁, IS₂ und/oder die die gegebenenfalls vorhandenen Meß- und Regelstufen 60₁, 60₂, von nachfolgenden Schaltungskomponenenten der Meßgerät-Elektronik 20, insb. der Betriebs- und Auswerteschaltung 50 ebenfalls galvanisch getrennt zu halten.

Wie eingangs bereits erwähnt, werden die Meßgerät-Elektronik und insofern auch das Meßgerät von zumindest einer im übergeordneten Datenverarbeitungssystem 2 vorgehaltenen externen elektrischen Energieversorgung 70 gespeist, die über wenigstens eines der Paare elektrischer Leitungen 2L₁, 2L₂ mit der Meßgerät-Elektronik 20 verbunden ist. Zudem ist im Datenverarbeitungssystem 2 zumindest eine entsprechende externe, gegebenenfalls auch mehrteilig ausgebildete Auswerteschaltung 80 für die vom Meßgerät gesendeten Meßwerte vorgesehen. Diese wiederum kann über das Feldbussystem mit einer Speicherprogrammierbaren Steuerung (SPS) und/oder einem in einer in einer Prozeßkontroll-Warte stationierten übergeordneten Prozeßrechner verbunden sein. Bei dem in Fig. 1 gezeigten Ausführungsbeispiel ist die Auswerteschaltung 80 mittels einer mit dem ersten Leitungspaar kommunizierenden erste Auswerte-Teilschaltung 80₁ zum Erfassen von via erstes Leitungspaar übermittelten Meßwerten sowie mittels einer mit dem zweiten Leitungspaar kommunizierende zweiten Auswerte-Teilschaltung 80₂ zum Erfassen von via zweites Leitungspaar übermittelten Meßwerten gebildet.

Zum Erzeugen von entsprechend stromrepräsentativen, insb. im wesentlichen stromproportionalen, Meßspannungen sind nach einer Weiterbildung der Erfindung im Datenverarbeitungssystem - beispielsweise unmittelbar in die Auswerteschaltung 80 integriert - vom jeweiligen Strom I₁, I₂ oder davon abgezeigten Teilströmen durchflossene Meßwiderstände vorgesehen. Diese können gegebenenfalls zusätzlich wiederum auch der Strombegrenzung dienen. Jedes der wenigstens zwei Leitungspaare 2L₁, 2L₂ kann beispielsweise mit der den jeweiligen Strom I ₁, I₂ einspeisenden Energiequelle und dem entsprechenden Meßwiderstand in Reihe geschaltet sein. Jeder Meßwiderstand kann ferner mit entsprechenden Meß-Anschlüssen versehen sein, an denen der den jeweils übertragenen Meßwert momentan repräsentierende Strom I₁, I ₂ als stromproportionale Meßspannung entsprechend abgreifbar ist. Die Meßspannung kann z.B. vor Ort visualisiert und/oder einer nachgelagerten Meßwertverarbeitung entsprechend konvertiert zugeführt werden.

Zumindest für den vorbeschriebenen Fall, daß wenigstens der im ersten Leitungspaar 2L₁ fließende Strom I₁ als Signalträger für via erstes Leitungspaar 2L₁ zu übertragende Meßwerte dient, ist gemäß einer weiteren Ausgestaltung der Erfindung daher vorgesehen, daß das Datenverarbeitungssystem weiters wenigstens einen zumindest zeitweise vom ersten Strom I₁ durchflossen ersten Meßwiderstand R_{M1} aufweist und daß die wenigstens eine Auswerteschaltung 80 zumindest zeitweise eine mit dem ersten Strom I₁ korrespondierende, im wesentlichen über dem ersten Meßwiderstand R_{M1} abfallende Meßspannung U_{M1} erfaßt. Gleichermaßen umfaßt das Datenverarbeitungssystem - zumindst in dem Fall, daß der auch im zweiten Leitungspaar 2L₂ fließende Strom I₂ als Signalträger für via zweites Leitungspaar 2L₂ zu übertragende Meßwerte dient - weiters wenigstens einen zumindest zeitweise vom zweiten Strom I ₂ durchflossen zweiten Meßwiderstand R_{M2} auf. Desweiteren erfaßt dann die wenigstens eine Auswerteschaltung 80 des Datenverarbeitungssystem 2 zumindest zeitweise eine mit dem zweiten Strom I₂ korrespondierende, im wesentlichen über dem zweiten Meßwiderstand R_{M2} abfallende Meßspannung U_{M2}. Im in Fig. 1 gezeigten Ausführungsbeispiel ist der Meßwiderstand R_{M1} für das erste Leitungspaar 2L₁ unmittelbar in der erste Auswerte-Teilschaltung 80₁ angeordnet, während der Meßwiderstand R_{M2} für das zweite Leitungspaar 2L₂ unmittelbar in der zweiten Auswerte-Teilschaltung 80₂ plaziert ist. Im übrigen kann die mittels wenigstens zwei Auswerte-Teilschaltungen gebildete Auswerteschaltung 80 beispielsweise im Zusammenspiel zweier jeweils in herkömmlicher Zweileiter-Technologie ausgebildeter, insb. auch feldbusfähiger, Strom-zu-Feldbus-Konverter gebildet sein. Dabei kann z.B. die externe Energieversorgung 70, wie in Fig. 1 exemplarisch dargestellt, als ein die wenigstens zwei Leitungpaare 2L₁, 2L₂ zentral speisendes Energieversorgungsmodul ausgebildet sein. Alternativ ist aber auch möglich externe Energieversorgung 70 und Auswerteschaltung 80 in der Weise zu realisieren, daß jedes der wenigstens zwei Leitungpaare 2L₁, 2L ₂ an jeweils ein herkömmliches, insb. feldbusfähiges, Meßumformer-Speisgerät für Zweileiter-Meßgeräte angeschlossen ist, wobei jedes der Meßumformer-Speisgeräte für sich genommen anteilig sowohl die Versorgung des Meßgeräts 1 als auch die Konvertierung vom Meßgerät gesendeter Meßwerte realisiert. Die Meßumformer-Speisegeräte können beispielsweise jeweils als ein herkömmliches Hutschienenmodul ausgebildet sein. Im übrigen können aber auch andere, insb. auch herkömmliche, Zweileiter-Schnittstellen zum Betrieb des Meßgeräts im Datenverarbeitungssystem vorgesehen werden.

## Patentansprüche

1. Meßgerät, umfassend:
- einen auf Änderungen wenigstens einer physikalischen oder chemischen Meßgröße reagierenden Meßaufnehmer (10), der wenigstens ein von der wenigstens einen Meßgröße beeinflußtes Meßsignal (s₁) liefert,
- sowie eine an den Meßaufnehmer (10) angeschlossene Meßgerät-Elektronik (20),
-- wobei die Meßgerät-Elektronik zum Betrieb mittels wenigstens eines ersten Leitungspaares (2L₁) und mittels wenigstens eines zweiten Leitungspaares (2L₂) an ein übergeordenetes, insb. räumlich verteiltes und/oder vom Meßgerät räumlich entferntes, elektronisches Datenverarbeitungssystem (2) anschließbar ist, und
-- wobei die Meßgerät-Elektronik (20) dafür ausgelegt ist, im Betrieb eine Vielzahl von zumindest anteilig die wenigstens eine Meßgröße repräsentierenden, insb. digitalen, Meßwerten zu generieren, und diese zumindest teilweise via erstes Leitungspaar und zumindest teilweise via zweites Leitungspaar an das angeschlossene Datenverarbeitungssystem zu übermitteln.

2. Meßgerät nach dem vorherigen Anspruch, wobei die Meßgerät-Elektronik und das erste Leitungspaar im Betrieb zumindest zeitweise von einem seitens des Datenverarbeitungssystems getriebenen, insb. zumindest anteilig oder gänzlich auch der Versorgung des Meßgeräts mit elektrischer Energie dienenden, ersten Strom (I₁) durchflossen sind.

3. Meßgerät nach dem vorherigen Anspruch, wobei die Meßgerät-Elektronik und das zweite Leitungspaar im Betrieb zumindest zeitweise von einem, insb. seitens des Datenverarbeitungssystems getriebenen, zweiten Strom (I₂) durchflossen sind, insb. dafür, daß das Meßgerät im Betrieb seinen Energiebedarf zumindest anteilig mittels des ersten Stroms und zumindest anteilig mittels des zweiten Stroms deckt und/oder daß das das Meßgerät im Betrieb seinen Energiebedarf zumindest zeitweise vollständig mittels des ersten Stroms und/oder mittels zweiten Stroms deckt.

4. Meßgerät nach einem der vorherigen Ansprüche,
- wobei innerhalb der Meßgerät-Elektronik Spannungsbegrenzer in den Verlauf des ersten und/oder des zweiten Leitungspaares geschaltet sind, die eine, insb. eingangs, in der Meßgerät-Elektronik allfällige anliegende elektrische Überspannung auf einen zulässigen Maximalwert begrenzen; und/oder
- wobei innerhalb der Meßgerät-Elektronik Strombegrenzer in den Verlauf des ersten und/oder des zweiten Leitungspaares geschaltet sind, die einen im jeweiligen Leitungspaar allfällig fließenden Kurzschlußstrom auf einen zulässigen Maximalwert begrenzen; und/oder
- wobei das erste Leitungspaar zumindest innerhalb der Meßgerät-Elektronik vom zweiten Leitungspaar galvanisch getrennt und/oder räumlich separiert, insb. abgeschottet oder abgekapselt, ist; und/oder
- wobei in der Meßgerät-Elektronik wenigstens ein Übertrager zur galvanischen Trennung der beiden Leitungspaare (2L₁, 2L₂) vorgesehen ist; und/oder
- wobei in der Meßgerät-Elektronik (20) wenigstens ein Optokoppler zur galvanischen Trennung der beiden Leitungspaare (2L₁, 2L₂) vorgesehen ist.

5. Meßgerät nach einem der vorherigen Ansprüche, wobei die Meßgerät-Elektronik einen primärseitg an das erste Leitungspaar angeschlossenen ersten Spannungskonverter (30₁) und einen primärseitg an das zweite Leitungspaar angeschlossenen zweiten Spannungskonverter (30₂) aufweist.

6. Meßgerät nach dem vorherigen Anspruch,
- wobei die beiden Spannungskonverter (30₁, 30₂) sekundärseitig miteinander elektrisch gekoppelt, insb. galvanisch verbunden, sind; und/oder
- wobei die beiden Spannungskonverter (30₁, 30₂) im Betrieb im wesentlichen gleichfrequent getaktet sind; und/oder
- wobei die beiden Spannungskonverter (30₁, 30₂) im Betrieb asynchron getaktet sind; und/oder
- wobei die beiden Spannungskonverter (30₁, 30₂) im Betrieb außerphasig, insb. gegenphasig, getaktet sind.

7. Meßgerät nach einem der vorherigen Ansprüche, wobei das Meßgerät (1) weiters wenigstens einen auf Änderungen zumindest der wenigstens einen zu erfassenden Meßgröße reagierenden Meßaufnehmer (10) umfaßt, der wenigstens ein zumindest mit dieser Meßgröße korrespondierendes Meßsignal (s₁, s₂) an die Meßgerät-Elektronik (20) liefert.

8. Meßgerät nach dem vorherigen Anspruch,
- wobei die Meßgerät-Elektronik des Meßgeräts, die Meßwerte zumindest teilweise unter Verwendung des wenigstens einen Meßsignals (s₁) erzeugt; und/oder
- wobei der Meßaufnehmer auf Änderungen einer zu erfassenden Meßgröße, X₁, erster Art und wenigstens einer zu erfassenden Meßgröße, X₂, zweiter Art reagiert, insb. derart daß das wenigstens eine vom Meßaufnehmer gelieferte Meßsignal auch die Meßgröße zweiter Art repräsentiert; und/oder
- wobei der Meßaufnehmer wenigstens ein erstes Meßsignal (s₁) und ein zweites Meßsignal (s₂) liefert, insb. dafür, daß die Meßgerät-Elektronik die Meßwerte zumindest teilweise unter Verwendung des ersten und des zweiten Meßsignals erzeugt.

9. Meßgerät nach einem der vorherigen Ansprüche, wobei das Meßgerät weiters wenigstens einen auf Änderungen zumindest der wenigstens einen zu erfassenden Meßgröße reagierenden Meßaufnehmer (10) umfaßt, der wenigstens ein zumindest mit dieser Meßgröße korrespondierendes Meßsignal (s₁) an die Meßgerät-Elektronik liefert.

10. Meßgerät nach dem vorherigen Anspruch,
- wobei die Meßgerät-Elektronik des Meßgeräts, die Meßwerte zumindest teilweise unter Verwendung des wenigstens einen Meßsignals erzeugt; und/oder
- wobei der Meßaufnehmer auf Änderungen einer zu erfassenden Meßgröße, X₁, erster Art und wenigstens einer zu erfassenden Meßgröße, X₂, zweiter Art reagiert, insb. derart, daß das wenigstens eine vom Meßaufnehmer gelieferte Meßsignal auch die Meßgröße zweiter Art repräsentiert; und/oder
- wobei der Meßaufnehmer wenigstens ein erstes und ein zweites Meßsignal (s₁, s₂) liefert, insb. dafür, daß die Meßgerät-Elektronik die Meßwerte zumindest teilweise unter Verwendung des ersten und des zweiten Meßsignals erzeugt.

11. Meßanordnung zum Erfassen chemischer und/oder physikalischer Meßgrößen, insb. von strömungsfähigen und/oder schüttfähigen Medien, welche Meßanordnung wenigstens ein Meßgerät (1) gemäß einem der vorherigen Ansprüche sowie ein dem wenigstens einen Meßgerät (1) übergeordenetes, insb. räumlich verteiltes und/oder vom Meßgerät räumlich entferntes, elektronisches Datenverarbeitungssystem (2) umfaßt,
- wobei Meßgerät (1) und Datenverarbeitungssystem (2) mittels wenigstens eines im Betrieb zumindest zeitweise von einem ersten Strom (I₁) durchflossen ersten Leitungspaares (2L₁) und mittels wenigstens eines im Betrieb zumindest zeitweise von einem zweiten Strom (I₂) durchflossen zweiten Leitungspaares (2L₂) miteinander verbunden sind, und
- wobei das Meßgerät (1) die intern generierten Meßwerte zumindest teilweise über das erste Leitungspaar (2L₁) und zumindest teilweise über das zweite Leitungspaar (2L₂) an das Datenverarbeitungssystem (2) übermittelt.

12. Meßanordnung nach dem vorherigen Anspruch,
wobei das Datenverarbeitungssystem wenigstens eine erste Versorgungsspannung (U_{V1}) bereitstellt, die zumindest zeitweise den durch das erste Leitungspaar (2L₁) fließenden ersten Strom (I₁) treibt, und wobei das Datenverarbeitungssystem wenigstens eine zweite Versorgungsspannung (U_{V2}) bereitstellt, die zumindest zeitweise den durch das zweite Leitungspaar (2L₂) fließenden zweiten Strom (I₂) treibt; und/oder
- wobei das Datenverarbeitungssystem (2) wenigstens eine Versorgungsspannung (u_{V1}) bereitstellt, die zumindest den durch das erste Leitungspaar (2L₁) fließenden Strom treibt, inbs. derart, daß die wenigstens eine Versorgungsspannung sowohl den durch das erste Leitungspaar (2L₁) als auch den durch das zweite Leitungspaar (2L₂) fließenden Strom (I₁, I₂) treibt; und/oder
- wobei das Meßgerät generierte Meßwerte an das Datenverarbeitungssystem übermittelt, indem es eine Stromstärke eines zumindest zeitweise durch das zweite Leitungspaar (2L₂) fließenden Stromes (I₂) einstellt, insb. derart, daß das Meßgerät den im zweiten Leitungspaar fließenden Strom innerhalb eines vorgegebenen Stromstärke-Bereichs, oder daß das Meßgerät den im zweiten Leitungspaar fließenden Strom taktet; und/oder
- wobei das Meßgerät intern generierte Meßwerte an das Datenverarbeitungssystem übermittelt, indem es eine Stromstärke des zumindest zeitweise durch das erste Leitungspaar (2L₁) fließenden Stromes (I₁) einstellt, insb. derart, daß das Meßgerät den im ersten Leitungspaar (2L₁) fließenden Strom (I₁) innerhalb eines vorgegebenen Stromstärke-Bereichs variiert, oder daß das Meßgerät den im ersten Leitungspaar fließenden Strom taktet; und/oder
- wobei wenigstens der erste Strom zumindest anteilig, insb. gänzlich, auch der Versorgung des Meßgeräts (1) mit elektrischer Energie dient; und/oder
- wobei jeder der beiden Ströme zumindest zeitweise und/oder zumindest anteilig auch der Versorgung des Meßgeräts (1) mit elektrischer Energie dient; und/oder
- wobei das Meßgerät (1) seinen momentanen Energiebedarf zumindest anteilig mittels des ersten Stroms (I₁) deckt; und/oder
- wobei das Meßgerät seinen momentanen Energiebedarf zumindest anteilig mittels des ersten Stroms und zumindest anteilig mittels des zweiten Stroms deckt; und/oder
- wobei das Meßgerät seinen momentanen Energiebedarf vollständig mittels des ersten und zweiten Stroms deckt; und/oder
- wobei in den Verlauf des ersten und/oder in den Verlauf des zweiten Leitungspaares, insb. eingangs der Meßgerät-Elektronik, Spannungsbegrenzer geschaltet sind, die eine eingangs der Meßgerät-Elektronik allfällige anliegende elektrische Überspannung auf einen zulässigen Maximalwert begrenzen; und/oder
- wobei in den Verlauf des ersten und/oder in den Verlauf des zweiten Leitungspaares, insb. eingangs der Meßgerät-Elektronik, Strombegrenzer geschaltet sind, die einen im jeweiligen Leitungspaar allfällig fließenden Kurzschlußstrom auf einen zulässigen Maximalwert begrenzen; und/oder
- wobei das erste Leitungspaar vom zweiten Leitungspaar zumindest innerhalb der Meßgerät-Elektronik galvanisch getrennt und/oder räumlich separiert, insb. abgeschottet oder abgekapselt, ist; und/oder
- wobei Meßgerät (1) und Datenverarbeitungssystem (2) weiters mittels wenigstens eines dritten, im Betrieb zumindest zeitweise von einem dritten Strom durchflossenen Leitungspaares miteinander verbunden sind, insb. derart, daß das Meßgerät (61) die intern generierten Meßwerte zumindest teilweise auch über das dritte Leitungspaar an das Datenverarbeitungssystem übermittelt.

13. Meßanordnung nach einem der vorherigen Ansprüche, wobei das Datenverarbeitungssystem weiters umfaßt:
wenigstens einen dem Übertragen digitaler Meßwerte dienenden, insb. seriellen, Feldbus (FB); und/oder wenigstens einen zumindest zeitweise vom ersten Strom durchflossen ersten Meßwiderstand (R_{M1}), insb. auch wenigstens einen zumindest zeitweise vom zweiten Strom durchflossenen zweiten Meßwiderstand (R_{M2}); und/oder
wenigstens eine mit zumindest einem der Leitungspaare kommunizierende, insb. an wenigstens einen Feldbus des Datenverarbeitungssystems gekoppelte und/oder eine mit dem ersten Strom korrespondierende, im wesentlichen über dem ersten Meßwiderstand abfallende Meßspannung (U_{M1}) erfassende, Auswerteschaltung (80) zum Erfassen von vom Meßgerät übermittelten Meßwerten.

14. Meßanordnung nach dem vorherigen Anspruch, wobei das Datenverarbeitungssystem weiters wenigstens einen zumindest zeitweise vom zweiten Strom durchflossen zweiten Meßwiderstand (R_{M2}) sowie eine Auswerte-Schaltung zum Erfassen von vom Meßgerät übermittelten Meßwerten umfaßt, die zumindest zeitweise eine mit dem zweiten Strom korrespondierende, im wesentlichen über dem zweiten Meßwiderstand abfallende Meßspannung (U_{M2}) erfaßt.

15. Meßanordnung nach einem der vorherigen Ansprüche, wobei das Datenverarbeitungssystem weiters eine mit dem ersten Leitungspaar kommunizierende, insb. zumindest zeitweise eine im wesentlichen über einem vom ersten Strom durchflossenen Meßwiderstand (R_{M1}) abfallende Meßspannung erfassende, erste Auswerte-Teilschaltung (80₁) zum Erfassen von via erstes Leitungspaar übermittelten Meßwerten sowie eine mit dem zweiten Leitungspaar kommunizierende, insb. zumindest zeitweise eine im wesentlichen über einem vom zweiten Strom durchflossenen Meßwiderstand (R_{M2}) abfallende Meßspannung erfassende, zweite Auswerte-Teilschaltung (80₂) zum Erfassen von via zweites Leitungspaar übermittelten Meßwerten umfaßt.

## Claims

1. Measuring device, comprising
- a sensor (10) responding to changes to at least one physical or chemical measured variable, said sensor supplying at least one measuring signal (s₁) influenced by the at least one measured variable,
- as well as measuring device electronics (20) connected to the sensor (10),
-- wherein the measuring device electronics can be connected, for operation purposes, to a higher-order electronic data processing system (2), particularly a spatially distributed data processing system and/or a data processing system that is situated at a distance from the measuring device, by means of at least a first pair of wires (2L₁) and by means of at least a second pair of wires (2L₂), and
-- wherein the measuring device electronics (20) are designed to generate, during operation, a large number of measured values, particularly digital measured values, representing, at least in part, the at least one measured variable, and to transmit these values to the connected data processing system at least in part via the first pair of wires and at least in part via the second pair of wires.

2. Measuring device as claimed in the previous claim, wherein, during operation, a first current (I₁) at least intermittently flows through the measuring device electronics and the first pair of wires, said current being caused to flow on the part of the data processing system and in particular serving to also supply electrical energy, at least in part or entirely, to the measuring device.

3. Measuring device as claimed in the previous claim, wherein, during operation, a second current (I₂) at least intermittently flows through the measuring device electronics and the second pair of wires, said current being caused to flow, in particular on the part of the data processing system, particularly so that, during operation, the measuring device covers its energy needs at least in part with the first current and at least in part with the second current and/or so that, during operation, the measuring device at least temporarily covers its energy needs completely with the first current and/or with the second current.

4. Measuring device as claimed in one of the previous claims,
- wherein voltage limiters are switched within the measuring device electronics in the course of the first and/or second pair of wires, limiting any electrical overvoltage present in the measuring device electronics, particularly at the input, to a permitted maximum value, and/or
- wherein current limiters are switched within the measuring device electronics in the course of the first and/or second pair of wires, limiting any short-circuit current flowing in the particular pair of wires to a permitted maximum value, and/or
- wherein, at least within the measuring device electronics, the first pair of wires is galvanically isolated and/or physically separated, particularly sealed off or isolated, from the second pair of wires; and/or
- wherein at least one transducer is provided in the measuring device electronics (20) for the galvanic isolation of the two pairs of wires (2L₁, 2L₂), and/or
- wherein at least one optocoupler is provided in the measuring device electronics (20) for the galvanic isolation of the two pairs of wires (2L₁, 2L₂).

5. Measuring device as claimed in one of the previous claims, wherein the measuring device electronics have a first voltage converter (30₁) connected to the first pair of wires on the primary side, and a second voltage converter (30₂) connected to the second pair of wires on the primary side.

6. Measuring device as claimed in the previous claim,
- wherein the two voltage converters (30₁, 30₂) are electrically coupled with one another, particularly galvanically connected to one another, on the secondary side, and/or
- wherein, during operation, the two voltage converters (30₁, 30₂) are essentially clocked at the same frequency, and/or
- wherein, during operation, the two voltage converters (30₁, 30₂) are clocked in an asynchronous manner, and/or
- wherein, during operation, the two voltage converters (30₁, 30₂) are clocked in an out-of-phase manner, particularly in antiphase.

7. Measuring device as claimed in one of the previous claims, wherein the measuring device (1) further comprises at least one sensor (10) that responds at least to changes of the at least one measured variable to be measured, said sensor supplying at least one measuring signal (s₁, s₂), which corresponds at least to this measured variable, to the measuring device electronics (20).

8. Measuring device as claimed in the previous claim,
- wherein the electronics of the measuring device generate the measured values at least in part by using the one measuring signal (s₁) at least, and/or
- wherein the sensor reacts to changes in a measured variable to be measured, X1, of a first kind and at least to changes in a measured variable to be measured, X2, of a second kind, particularly in such a way that the one measuring signal, at least, which is supplied by the sensor also represents the measured variable of the second kind, and/or
- wherein the sensor supplies at least a first measuring signal (s₁) and a second measuring signal (s₂), particularly so that the measuring device electronics generate the measured values at least in part using the first and second measuring signal.

9. Measuring device as claimed in one of the previous claims, wherein the measuring device further comprises at least one sensor (10) that responds at least to changes in the at least one measured variable to be measured, said sensor supplying at least one measuring signal (s₁), which corresponds at least to this measured variable, to the measuring device electronics.

10. Measuring device as claimed in the previous claim,
- wherein the electronics of the measuring device generate the measured values at least in part by using the one measuring signal at least, and/or
- wherein the sensor reacts to changes in a measured variable to be measured, X₁, of a first kind and at least to changes in a measured variable to be measured, X₂, of a second kind, particularly in such a way that the one measuring signal, at least, which is supplied by the sensor also represents the measured variable of the second kind, and/or
- wherein the sensor supplies at least a first and a second measuring signal (s₁, s₂), particularly so that the measuring device electronics generate the measured values at least in part using the first and the second measuring signal.

11. Measuring arrangement to measure chemical and/or physical measured variables, particularly of media which can flow or be poured, said measuring arrangement comprising at least one measuring device (1) as claimed in one of the previous claims, and an electronic data processing system (2) which is superordinate to the at least one measuring device (1), particularly a data processing system that is spatially distributed and/or physically at a distance from the measuring device,
- wherein the measuring device (1) and the data processing system (2) are interconnected by a first pair of wires (2L₁) through which, at least during operation, a first current (I₁) at least intermittently flows, and by a second pair of wires (2L₂) through which, at least during operation, a second current (I₂) at least intermittently flows, and
- wherein the measuring device (1) transmits the measured values, which are generated internally, to the data processing system (2) at least in part via the first pair of wires (2L₁) and at least in part via the second pair of wires (2L₂).

12. Measuring arrangement as claimed in the previous claim,
- wherein the data processing system provides at least a first supply voltage (Uᵥ₁), which at least intermittently causes the first current (I₁), which flows through the first pair of wires (2L₁), to flow and wherein the data processing system provides at least a second supply voltage (Uᵥ₂), which at least intermittently causes the second current (I₂), which flows through the second pair of wires (2L₂), to flow
- wherein the data processing system (2) provides at least a supply voltage (Uᵥ₁), which at least causes the current flowing through the first pair of wires (2L₁) to flow, particularly in such a way that the at least one supply voltage causes both the current (I₁, I₂) flowing through the first pair of wires (2L₁) and through the second pair of wires (2L₂) to flow, and/or
- wherein the measuring device transmits generated measured values to the data processing system by setting a current intensity of a current (I₂) flowing at least intermittently through the second pair of wires (2L₂), particularly in such a way that the measuring device varies the current flowing in the second pair of wires within a predefined range of current intensity, or that the measuring device "times" the current flowing in the second pair of wires, and/or
- wherein the measuring device transmits measured values generated internally to the data processing system by setting a current intensity of the current (I₁) flowing at least intermittently through the first pair of wires (2L₁), particularly in such a way that the measuring device varies the current (I₁) flowing in the first pair of wires (2L₁) within a predefined range of current intensity, or that the measuring device "times" the current flowing in the first pair of wires, and/or
- wherein at least the first current also serves to supply at least proportionately, and particularly entirely, the measuring device (1) with electrical energy, and/or
- wherein each of the two currents also serves to supply the measuring device (1) with electrical energy at least intermittently and/or at least proportionately, and/or
- wherein the measuring device (1) at least proportionately covers its current energy needs with the first current (I₁), and/or
- wherein the measuring device at least proportionately covers its current energy needs with the first current and at least proportionately with the second current, and/or
- wherein the measuring device completely covers its current energy needs with the first and second current, and/or
- wherein voltage limiters are switched in the course of the first and/or in the course of the second pair of wires, particularly at the input of the measuring device electronics, said voltage limiters serving to limit any electrical overvoltage present at the input of the measuring device electronics to a permitted maximum value, and/or
- wherein current limiters are switched in the course of the first and/or in the course of the second pair of wires, particularly at the input of the measuring device electronics, said current limiters serving to limit any short-circuit current flowing in the particular pair of wires to a permitted maximum value, and/or
- wherein the first pair of wires is galvanically isolated and/or physically separate, particularly sealed off or isolated, from the second pair of wires at least within the measuring device electronics, and/or
- wherein the measuring device (1) and the data processing system (2) are further interconnected by at least a third pair of wires through which a third current flows at least intermittently during operation, particularly in such a way that the measuring device (61) at least partially transmits the measured values generated internally to the data processing system also via the third pair of wires.

13. Measuring arrangement as claimed in one of the previous claims, wherein the data processing system further comprises:
- at least one fieldbus (FB), particularly a serial fieldbus, which serves to transmit digital measured values, and/or
- at least a first measuring resistor (RM₁) through which the first current flows at least intermittently, particularly also at least a second measuring resistor (RM₂) through which the second current flows at least intermittently, and/or
- at least one evaluation circuit (80), designed to record measured values transmitted by the measuring device and communicating with at least one of the pairs of wires, particularly coupled to at least a fieldbus of the data processing system and/or measuring a measurement voltage (U_{M1}) essentially dropping over the first measuring resistor and corresponding to the first current.

14. Measuring arrangement as claimed in the previous claim, wherein the data processing system further comprises at least a second measuring resistor (RM₂) through which the second current flows at least intermittently and an evaluation circuit to record measured values transmitted by the measuring device, said circuit at least intermittently measuring a measurement voltage (UM₂) which essentially drops over the second measuring resistor and corresponds to the second current.

15. Measuring arrangement as claimed in one of the previous claims, wherein the data processing system further comprises a first evaluation sub-circuit (80₁), designed to record measured values transmitted via the first pair of wires and communicating with the first pair of wires, particularly measuring at least intermittently a measurement voltage which essentially drops over a measuring resistor (RM₁) through which the first current flows, and a second evaluation sub-circuit (80₂), designed to record measured values transmitted via the second pair of wires and communicating with the second pair of wires, particularly measuring at least intermittently a measurement voltage which essentially drops over a measuring resistor (R_{M2}) through which the second current flows.

## Revendications

1. Appareil de mesure, comprenant
- un capteur (10) réagissant à des variations d'au moins une grandeur de mesure physique ou chimique, lequel capteur fournit au moins un signal de mesure (s₁) influencé par l'au moins une grandeur de mesure,
- ainsi qu'une électronique d'appareil de mesure (20) raccordée au capteur (10),
-- l'électronique d'appareil de mesure pouvant être raccordée, pour le fonctionnement, au moyen d'au moins une première paire de fils (2L₁) et au moyen d'au moins une deuxième paire de fils (2L₂) à un système de traitement de données (2) électronique maître, notamment réparti dans l'espace et/ou situé à distance de l'appareil de mesure, et
-- l'électronique d'appareil de mesure étant conçue de telle sorte à générer, en fonctionnement, un grand nombre de valeurs de mesure, notamment numériques, représentant au moins partiellement l'au moins une grandeur de mesure, et à les transmettre au système de traitement de données raccordé au moins partiellement via la premier paire de fils et au moins partiellement via la deuxième paire de fils.

2. Appareil de mesure selon la revendication précédente, pour lequel l'électronique d'appareil de mesure et la première paire de fils sont, en fonctionnement, parcourues au moins temporairement par un premier courant (I₁) généré du côté du système de traitement de données, servant notamment également, en partie ou totalement, à l'alimentation de l'appareil de mesure en énergie électrique.

3. Appareil de mesure selon la revendication précédente, pour lequel l'électronique d'appareil de mesure et la deuxième paire de fils sont, en fonctionnement, parcourues au moins temporairement par un deuxième courant (I₂) généré du côté du système de traitement de données, notamment afin que l'appareil de mesure couvre, en fonctionnement, son besoin en énergie au moins partiellement au moyen du premier courant et au moins partiellement au moyen du deuxième courant et/ou afin que l'appareil de mesure couvre, en fonctionnement, son besoin en énergie au moins temporairement intégralement au moyen du premier courant et/ou au moyen du deuxième courant.

4. Appareil de mesure selon l'une des revendications précédentes,
- pour lequel sont couplés au sein de l'électronique d'appareil de mesure, dans le cheminement de la première et/ou de la deuxième paire de fils, des limiteurs de tension qui limitent à une valeur maximale admissible une éventuelle surtension présente, notamment à l'entrée, de l'électronique d'appareil de mesure, et/ou
- pour lequel sont couplés au sein de l'électronique d'appareil de mesure, dans le cheminement de la première et/ou de la deuxième paire de fils, des limiteurs de courant qui limitent à une valeur maximale admissible un éventuel courant de court-circuit circulant dans la paire de fils respective, et/ou
- pour lequel la première paire de fils est, au moins à l'intérieur de l'électronique d'appareil de mesure, séparée galvaniquement et/ou séparée dans l'espace, notamment cloisonnée ou confinée, par rapport à la deuxième paire de fils, et/ou
- pour lequel est prévu dans l'électronique d'appareil de mesure au moins un transformateur pour la séparation galvanique des deux paires de fils (2L₁, 2L₂), et/ou
- pour lequel est prévu dans l'électronique d'appareil de mesure (20) au moins un optocoupleur pour la séparation galvanique des deux paires de fils (2L₁, 2L₂).

5. Appareil de mesure selon l'une des revendications précédentes, pour lequel l'électronique d'appareil de mesure comporte un premier convertisseur de tension (30₁) dont le côté primaire est raccordé à la première paire de fils et un deuxième convertisseur de tension (30₂) dont le côté primaire est raccordé à la deuxième paire de fils.

6. Appareil de mesure selon la revendication précédente,
- pour lequel les deux convertisseurs de tension (30₁, 30₂) sont couplés électriquement côté secondaire, notamment reliés galvaniquement, et/ou
- pour lequel les deux convertisseurs de tension (30₁, 30₂) sont, en fonctionnement, cadencés pour l'essentiel à la même fréquence, et/ou
- pour lequel les deux convertisseurs de tension (30₁, 30₂) sont cadencés de façon asynchrone, et/ou
- pour lequel les deux convertisseurs de tension (30₁, 30₂) sont, en fonctionnement, cadencés de façon déphasée, notamment en opposition de phase.

7. Appareil de mesure selon l'une des revendications précédentes, pour lequel l'appareil de mesure (1) comprend en outre au moins un capteur (10) réagissant à des variations d'au moins une grandeur à mesurer, lequel capteur délivre à l'électronique d'appareil de mesure (20) au moins un signal de mesure (s₁, s₂) correspondant au moins à cette grandeur de mesure.

8. Appareil de mesure selon la revendication précédente,
- pour lequel l'électronique de l'appareil de mesure génère les valeurs mesurées au moins partiellement en utilisant l'au moins un signal de mesure (s₁), et/ou
- pour lequel le capteur réagit à des variations d'une grandeur à mesurer, X1, de premier type et au moins d'une grandeur à mesurer, X2, de deuxième type, notamment de telle sorte que l'au moins un signal de mesure délivré par le capteur représente également la grandeur de mesure de deuxième type, et/ou
- pour lequel le capteur délivre au moins un premier signal de mesure (s₁) et un deuxième signal de mesure (s₂), notamment afin que l'électronique d'appareil de mesure génère les valeurs de mesure au moins partiellement en utilisant le premier et le deuxième signal de mesure.

9. Appareil de mesure selon l'une des revendications précédentes, pour lequel l'appareil de mesure comprend en outre au moins un capteur réagissant à des variations d'au moins une grandeur à mesurer, lequel capteur délivre à l'électronique d'appareil de mesure (20) au moins un signal de mesure (s₁) correspondant au moins à cette grandeur de mesure.

10. Appareil de mesure selon la revendication précédente,
- pour lequel l'électronique de l'appareil de mesure génère les valeurs mesurées au moins partiellement en utilisant l'au moins un signal de mesure, et/ou
- pour lequel le capteur réagit à des variations d'une grandeur à mesurer, X1, de premier type et au moins d'une grandeur à mesurer, X2, de deuxième type, notamment de telle sorte que l'au moins un signal de mesure délivré par le capteur représente également la grandeur de mesure de deuxième type, et/ou
- pour lequel le capteur délivre au moins un premier signal de mesure et un deuxième signal de mesure (s_{1,} s₂), notamment afin que l'électronique d'appareil de mesure génère les valeurs de mesure au moins partiellement en utilisant le premier et le deuxième signal de mesure.

11. Configuration de mesure destinée à la saisie de grandeurs de mesure chimiques et/ou physiques, notamment de produits aptes à l'écoulement et/ou au déversement, laquelle configuration de mesure comprend au moins un appareil de mesure (1) selon l'une des revendications précédentes, ainsi qu'un système de traitement de données (2) électronique maître, notamment réparti dans l'espace et/ou situé à distance de l'appareil de mesure,
- pour laquelle l'appareil de mesure (1) et le système de traitement de données (2) sont reliés entre eux au moyen d'au moins une première paire de fils (2L₁) parcourue, en fonctionnement, au moins temporairement par un premier courant (I₁) et d'au moins une deuxième paire de fils (2L₂) parcourue, en fonctionnement, au moins temporairement par un deuxième courant (I₂), et
- pour laquelle l'appareil de mesure (1) transmet au système de traitement de données (2) les valeurs mesurées générées en interne au moins partiellement par l'intermédiaire de la première paire de fils (2L₁) et au moins partiellement par l'intermédiaire de la deuxième paire de fils (2L₂).

12. Configuration de mesure selon la revendication précédente,
- pour laquelle le système de traitement de données met à disposition au moins une première tension d'alimentation (Uᵥ₁), qui génère au moins temporairement le premier courant (I₁) circulant à travers la première paire de fils (2L₁), et pour laquelle le
système de traitement de données met à disposition au moins une deuxième tension d'alimentation (Uᵥ₂), qui génère au moins temporairement le deuxième courant (I₂) circulant à travers la deuxième paire de fils (2L₂), et/ou
- pour laquelle le système de traitement de données (2) met à disposition au moins une première tension d'alimentation (Uᵥ₁), qui génère au moins le courant circulant à travers la première paire de fils (2L₁), notamment de telle sorte que l'au moins une tension d'alimentation génère à la fois le courant (I₁, I₂) circulant à travers la première paire de fils (2L₁) et à travers la deuxième paire de fils (2L₂), et/ou
- pour laquelle l'appareil de mesure transmet les valeurs mesurées générées en interne au système de traitement de données, en ce qu'il règle une intensité du courant (I₂) circulant au moins temporairement à travers la deuxième paire de fils (2L₂), notamment de telle sorte que l'appareil de mesure varie le courant (I₂) circulant dans la deuxième paire de fils (2L₂) à l'intérieur d'une plage d'intensités de courant prédéfinie, ou en ce que l'appareil de mesure "découpe" le courant circulant dans la deuxième paire de fils, et/ou
- pour laquelle l'appareil de mesure transmet les valeurs mesurées générées en interne au système de traitement de données, en ce qu'il règle une intensité du courant (I₁) circulant au moins temporairement à travers la première paire de fils (2L₁), notamment de telle sorte que l'appareil de mesure varie le courant (I₁) circulant dans la première paire de fils (2L₁) à l'intérieur d'une plage d'intensités de courant prédéfinie, ou en ce que l'appareil de mesure "découpe" le courant circulant dans la première paire de fils, et/ou
- pour laquelle au moins le premier courant sert au moins partiellement, notamment intégralement, également à l'alimentation de l'appareil de mesure (1) en énergie électrique, et/ou
- pour laquelle chacun des deux courants sert au moins temporairement et/ou au moins partiellement également à l'alimentation de l'appareil de mesure (1) en énergie électrique, et/ou
- pour laquelle l'appareil de mesure (1) couvre son besoin momentané en énergie au moins partiellement au moyen du premier courant (I₁), et/ou
- pour laquelle l'appareil de mesure couvre son besoin momentané en énergie au moins partiellement au moyen du premier courant et au moins partiellement au moyen du deuxième courant, et/ou
- pour laquelle l'appareil de mesure couvre son besoin en énergie intégralement au moyen du premier et du deuxième courant, et/ou
- pour lequel sont couplés, notamment à l'entrée de l'électronique d'appareil de mesure, dans le cheminement de la première et/ou de la deuxième paire de fils, des limiteurs de tension qui limitent à une valeur maximale admissible une éventuelle surtension présente à l'entrée de l'électronique d'appareil de mesure, et/ou
- pour lequel sont couplés, notamment à l'entrée de l'électronique d'appareil de mesure, dans le cheminement de la première et/ou de la deuxième paire de fils, des limiteurs de courant qui limitent à une valeur maximale admissible un éventuel courant de court-circuit circulant dans la paire de fils respective, et/ou
- pour lequel la première paire de fils est, au moins à l'intérieur de l'électronique d'appareil de mesure, séparée galvaniquement et/ou séparée dans l'espace, notamment cloisonnée ou confinée, par rapport à la deuxième paire de fils, et/ou
- pour lequel l'appareil de mesure (1) et le système de traitement de données (2) sont en outre reliés entre eux au moyen d'une troisième paire de fils parcourue, en fonctionnement, au moins temporairement par un troisième courant, notamment de telle sorte que l'appareil de mesure (61) transmet au système de traitement de données les valeurs mesurées générées en interne au moins partiellement également par l'intermédiaire de la troisième paire de fils.

13. Configuration de mesure selon l'une des revendications précédentes, pour laquelle le système de traitement de données comprend en outre :
- au moins un bus de terrain (FB), notamment série, servant à la transmission des valeurs mesurées numériques, et/ou
- au moins une première résistance de mesure (RM₁) parcourue au moins temporairement par un premier courant, notamment également au moins une deuxième résistance de mesure (RM₂) parcourue au moins temporairement par un deuxième courant, et/ou
- au moins un circuit d'exploitation (80) destiné à l'acquisition des valeurs mesurées transmises par l'appareil de mesure, communiquant avec au moins l'une des paires de fils, notamment couplée à au moins un bus de terrain du système de traitement de données et/ou mesurant une tension de mesure (U_{M1}) chutant pour l'essentiel aux bornes de la première résistance de mesure, laquelle tension de mesure correspond au premier courant.

14. Configuration de mesure selon la revendication précédente, pour laquelle le système de traitement de données comprend en outre au moins une deuxième résistance de mesure (RM₂) parcourue au moins temporairement par un deuxième courant, ainsi qu'un circuit d'exploitation destiné à l'acquisition des valeurs mesurées transmises par l'appareil de mesure, lequel circuit mesure au moins temporairement une tension de mesure (UM₂) chutant pour l'essentiel aux bornes de la deuxième résistance de mesure, laquelle tension de mesure correspondant au deuxième courant.

15. Configuration de mesure selon l'une des revendications précédentes, pour laquelle le système de traitement de données comprend en outre un premier circuit partiel d'exploitation (80₁) destiné à l'acquisition des valeurs mesurées transmises via la première paire de fils, communiquant avec la première paire de fils, mesurant notamment au moins temporairement une tension chutant pour l'essentiel aux bornes de la résistance de mesure (R_{M1}) parcourue par le premier courant, ainsi qu'un deuxième circuit partiel d'exploitation (80₂) destiné à l'acquisition des valeurs mesurées transmises via la deuxième paire de fils, communiquant avec la deuxième paire de fils, mesurant notamment au moins temporairement une tension chutant pour l'essentiel aux bornes de la résistance de mesure (R_{M2}) parcourue par le deuxième courant.
